# EUROPEAN PATENT APPLICATION

(11) **EP 4 790 604 A1**
(43) Date of publication of application: **12.08.2026**
(21) Application number: 24880984.0
(22) Date of filing: 10.05.2024
(51) Int. Cl.: G06N 20/00

(54) **NEURAL NETWORK TRAINING METHOD AND RELATED DEVICE**

(30) Priority: 25.10.2023 CN 202311398570; 04.02.2024 CN 202410157625
(71) Applicant: Huawei Cloud Computing Technologies Co., Ltd., Gui'an New District, Guizhou 550025 (CN)
(72) Inventor: LIU, Shangyu, Shanghai 200240 (CN); LI, Bingshuai, Guiyang, Guizhou 550025 (CN); SHAO, Yunfeng, Guiyang, Guizhou 550025 (CN); ZHANG, Yu, Guiyang, Guizhou 550025 (CN); JI, Feifei, Guiyang, Guizhou 550025 (CN)
(74) Representative: Goddar, Heinz J.
(86) International application number: PCT/CN2024/092152
(87) International publication number: WO 2025/086605

(57) **Abstract**

Embodiments of this application disclose a neural network training method. A first module in a federated neural network is deployed in each of a plurality of first devices. The first module includes a feature extraction module. A plurality of second modules in the federated neural network and early exit modules connected to the respective second modules are deployed in a second device. It can be learned that, in a federated learning process, the second device may include a plurality of early exit nodes, and each early exit node corresponds to one second module and a corresponding early exit module connected to the second module. In this way, after federated learning, when a target network is deployed in the first device, a structure of the target network may be in a plurality of forms based on the plurality of early exit nodes. In other words, target networks of different structures may be flexibly deployed in different first devices. For example, flexible scheduling may be performed based on resource statuses of different first devices, so that each first device can implement efficient data processing through a target network of an appropriate scale.

## Description

This application claims priorities to Chinese Patent Application No. 202311398570.6, filed with the China National Intellectual Property Administration on October 25, 2023 and entitled "MODEL TRAINING METHOD, APPARATUS, AND SYSTEM", and to Chinese Patent Application No. 202410157625.2, filed with the China National Intellectual Property Administration on February 4, 2024 and entitled "NEURAL NETWORK TRAINING METHOD AND RELATED DEVICE", both of which are incorporated herein by reference in their entireties.

### TECHNICAL FIELD

This application relates to the field of artificial intelligence technologies, and specifically, to a neural network training method and a related device.

### BACKGROUND

In recent years, large-scale neural networks have been widely used in many fields. To provide sufficient computational power, federated learning may be further used in combination with a plurality of electronic devices to implement training, deployment, and the like of the large-scale neural networks.

However, in application scenarios such as internet of things and mobile Internet, electronic devices such as a smartphone, a smart band, and a microcontroller have limited resources in terms of storage, computational power, power supply, and the like, leading to limited training operations and inference operations that can be carried in a federated learning process.

A manner of resolving the foregoing problem is to use a model early exit (model early exit) technology. Model early exit refers to an inference acceleration technology in which inference is ended in advance based on difficulty of input data in a multi-stage inference model to reduce redundant computing. The neural network may be considered as a multi-stage model including a plurality of layers connected in series, and a neural network to which the model early exit technology is applied may be referred to as an early-exit neural network (early-exit neural network).

Currently, in a federated learning system combined with the early-exit neural network, the neural network is usually divided into two subnetworks in advance, one subnetwork is deployed in a device like a terminal device, and the other subnetwork is deployed in a device like a cloud server. However, a two-level early-exit neural network is usually fixedly formed in this deployment manner. In an actual application process, it is difficult to flexibly perform resource scheduling and take full advantage of the model early exit technology, resulting in low data processing efficiency.

### SUMMARY

Embodiments of this application provide a neural network training method, to resolve a problem that in a current neural network training system, it is difficult to flexibly perform resource scheduling in a manner of deploying an early-exit neural network, resulting in low data processing efficiency. This application further provides a corresponding apparatus, a device, a computer-readable storage medium, a computer program product, and the like.

A first aspect of this application provides a neural network training method, applied to a plurality of first devices and a second device. A first module in a federated neural network is deployed in each of the plurality of first devices, the first module includes a feature extraction module, and a plurality of second modules in the federated neural network and early exit modules connected to the respective second modules are deployed in the second device.

In the method, the first module, the plurality of second modules, and the early exit modules connected to the respective second modules may be trained based on first data in the plurality of first devices, to obtain a trained first module, a plurality of trained second modules, and trained early exit modules. The plurality of first devices receives indication information from the second device, where the indication information indicates the plurality of first devices to deploy respective target networks, the target network deployed by a device A in the plurality of first devices includes a module A in the plurality of trained second modules and the trained early exit module connected to the module A, and the target network deployed by a device B in the plurality of first devices includes a module B in the plurality of trained second modules and the trained early exit module connected to the module B. The plurality of first devices deploy the target networks based on the indication message.

In the first aspect, in a federated learning process, the second device may include a plurality of early exit nodes, and each early exit node corresponds to one second module and a corresponding early exit module connected to the second module.

In this way, after federated learning, when a target network is deployed in the first device, a structure of the target network may be in a plurality of forms based on the plurality of early exit nodes. In other words, target networks of different structures may be flexibly deployed in different first devices. Specifically, the target network deployed by the device A in the plurality of first devices includes the module A in the plurality of trained second modules and the trained early exit module connected to the module A, and the target network deployed by the device B in the plurality of first devices includes the module B in the plurality of trained second modules and the trained early exit module connected to the module B.

It can be learned that a deployment manner of the target network in the first device is flexible, and the target network may be deployed based on a requirement of a current scenario. For example, flexible scheduling may be performed based on resource statuses of different first devices, so that each first device can implement efficient data processing through a target network of an appropriate scale.

In a possible implementation of the first aspect, a training process includes one or more stages; and the training, based on the first data in the plurality of first devices, the first module, the plurality of second modules, and the early exit modules connected to the respective second modules includes: In an i^{th} stage, the device A processes the first data of the i^{th} stage via the first module in the i^{th} stage, to obtain a first feature tensor of the i^{th} stage, where i is a positive integer. The device A sends the first feature tensor of the i^{th} stage to the second device. The second device trains the plurality of second modules in the i^{th} stage and the early exit modules in the i^{th} stage based on the received first feature tensor of the i^{th} stage, to obtain the plurality of trained second modules in the i^{th} stage and the trained early exit modules in the i^{th} stage. The second device processes the first feature tensor of the i^{th} stage via the plurality of trained second modules in the i^{th} stage, to obtain a first probability distribution of the i^{th} stage. The second device sends the first probability distribution of the i^{th} stage to the device A. The device A performs a plurality of times of iterative training on the first module in the i^{th} stage based on the first data of the i^{th} stage and the received first probability distribution of the i^{th} stage, to obtain a trained first module in the i^{th} stage.

In this possible implementation, the device A may train the first module in the i^{th} stage based on the first probability distribution, to further improve performance of the first module in the device A via knowledge that has been learned by the plurality of second modules in the second device.

In a possible implementation of the first aspect, that the device A performs the plurality of times of iterative training on the first module in the i^{th} stage based on the first data of the i^{th} stage and the received first probability distribution of the i^{th} stage, to obtain the trained first module in the i^{th} stage includes: The device A performs knowledge distillation on the first module in the i^{th} stage based on the first probability distribution of the i^{th} stage and the first data of the i^{th} stage, to obtain the trained first module in the i^{th} stage, where the knowledge distillation is implemented according to a loss function, and the loss function includes a first loss term, the first loss term is used to evaluate a similarity between a second probability distribution obtained by the first module during the knowledge distillation based on the first data of the i^{th} stage and the first probability distribution of the i^{th} stage.

In this possible implementation, the plurality of second modules and the early exit modules connected to the respective second modules are in the second device. The second device may be a device like a cloud platform, and therefore may have a large quantity of compute resources, and a scale of the plurality of second modules and the early exit modules connected to the respective second modules is also usually greater than that of the first module. In addition, there may be a plurality of first devices. Therefore, the plurality of second modules and the early exit modules connected to the respective second modules in the second device may learn more knowledge based on first feature tensors uploaded by the plurality of first devices than based on the first module in the single first device.

Based on this, in this possible implementation, the plurality of trained second modules in the i^{th} stage may be used as a teacher model, the first module in the i^{th} stage may be used as a student model, and based on the first probability distribution in a manner of knowledge distillation, the knowledge in the plurality of trained second modules in the i^{th} stage is migrated to the first module in the i^{th} stage, to obtain the trained first module in the i^{th} stage.

In a possible implementation of the first aspect, the method further includes: The second device obtains device performance information of the device A and/or performance information of communication between the device A and the second device. The second device determines a target network in the device A based on the device performance information of the device A and/or the performance information of the communication between the device A and the second device.

In this possible implementation, the target network that meets resource statuses of the device A may be determined based on the device performance information, so that in a subsequent inference process, a compute resource, a storage resource, and the like of the device A can meet a requirement of the subsequent inference process, thereby improving efficiency of the overall inference process.

The performance information of the communication may reflect a communication rate between the device A and the second device. For example, the performance information of the communication may include a communication bandwidth between the device A and the second device. The target network is determined based on the performance information of the communication, so that after the target network is deployed, in an inference process, an amount of data that may be transmitted between the device A and the second device does not cause long transmission time, thereby improving efficiency of the overall inference process.

In a possible implementation of the first aspect, after the device A deploys the target networks based on the indication message, the method further includes: The device A fixes a parameter of the second module in the target network, and trains the early exit module in the target network based on the first data in the device A, to update the target network.

In this possible implementation, after the deployment of the federated learning and the early-exit neural network is implemented, the target network in the device A may be further fine-tuned. During the fine-tuning, the trained first module and the trained second module in the device A may be fixed, and a weight of the early exit module in the target network may be fine-tuned based on the local first data in the device A, to improve performance of the early exit module in the target network based on the local data in the device A, so that the early exit module in the target network can better predict a local sample in the device A.

In a possible implementation of the first aspect, the method further includes: The device A obtains to-be-processed data. The device A obtains a first prediction result that is from at least one early exit module in the target network and that is about the to-be-processed data. The device A obtains a target prediction result of the to-be-processed data based on an early exit condition and the first prediction result, where the early exit condition includes a confidence threshold; and the confidence threshold is determined based on one or more of the following information: prediction accuracy of at least one early exit module in the device A, time consumed for prediction of the at least one early exit module in the device A, and performance of the communication between the device A and the second device.

In this possible implementation, the device A may sequentially obtain, along a depth direction, first prediction results output by the early exit modules, and determine, each time one first prediction result is obtained, that the first prediction result meets the early exit condition. Any first prediction result may include a probability distribution. If a maximum confidence in a specific first prediction result is greater than the confidence threshold, it indicates that a trustworthiness degree of the first prediction result is high, and the first prediction result meets the early exit condition. The first prediction result that meets the early exit condition may be used as a target prediction result, so that model early exit is implemented; or if the first prediction result does not meet the early exit condition, a target prediction result can be obtained only via the second module in the second device, and the second device feeds back the target prediction result to the device A.

For example, the confidence threshold may be determined by a user based on a current scenario requirement and a curve that describes a correspondence between prediction accuracy and time consumed for prediction of the at least one early exit module under different preset confidences. In addition, in some examples, the confidence threshold may alternatively be determined based on the performance of the communication between the device A and the second device. For example, if the performance of the communication is poor, it may be considered that the prediction is completed in the device A as much as possible, to reduce a possibility of data transmission between the device A and the second device. In this case, a small confidence threshold may be determined.

In a possible implementation of the first aspect, that the device A obtains the target prediction result of the to-be-processed data based on the early exit condition and the first prediction result includes: If any first prediction result meets the early exit condition, the device A uses the first prediction result that meets the early exit condition as the target prediction result.

In this possible implementation, if a specific first prediction result is greater than the confidence threshold, it indicates that a trustworthiness degree of the first prediction result is high, and the first prediction result meets the early exit condition. The first prediction result that meets the early exit condition may be used as a target prediction result, so that model early exit is implemented.

In a possible implementation of the first aspect, that the device A obtains the target prediction result of the to-be-processed data based on the early exit condition and the first prediction result includes: If no first prediction result meets the early exit condition, the device A sends a second feature tensor to the second device, where the second feature tensor is a feature tensor output by a target module in the device A based on the to-be-processed data, the target module is a trained first module in the device A or a trained second module in the device A, and the target module is determined based on one or more of the following information: a dimension of output data of the trained first module in the device A, a dimension of output data of the trained second module in the device A, and performance of the communication between the device A and the second device. The second device obtains the target prediction result based on the received second feature tensor via a second module that is in the plurality of trained second modules and that is after the target module. The second device sends the target prediction result to the device A. The device A receives the target prediction result from the second device.

In this possible implementation, when early exit cannot be performed, an output of the device A may be flexibly determined from an output of the trained first module of the device A and an output of the second module in the target network, so that corresponding inference performance is optimal (for example, an end-to-end delay of the inference process is optimal).

A second aspect of this application provides a neural network training method, applied to a second device. A plurality of second modules in a federated neural network and early exit modules connected to the respective second modules are deployed in the second device, a first module in the federated neural network is deployed in each of a plurality of first devices, and the method includes: The second device receives respective first feature tensors from the plurality of first devices. The second device trains, based on the first feature tensors, the plurality of second modules and the early exit modules connected to the respective second modules, to obtain a plurality of trained second modules and trained early exit modules, where the plurality of trained second modules include a module A and a module B, and the trained early exit modules include a trained early exit module connected to the module A and a trained early exit module connected to the module B. The second device sends indication information to the plurality of first devices, where the indication information indicates the plurality of first devices to deploy respective target networks, the target network deployed by a device A in the plurality of first devices includes a module A in the plurality of trained second modules and the trained early exit module connected to the module A, and the target network deployed by a device B in the plurality of first devices includes a module B in the plurality of trained second modules and the trained early exit module connected to the module B.

In a possible implementation of the second aspect, that the second device trains, based on the first feature tensors, the plurality of second modules and the early exit modules connected to the respective second modules includes: In an i^{th} stage, the second device receives a first feature tensor of the i^{th} stage from the device A, where i is a positive integer. The second device trains the plurality of second modules in the i^{th} stage and the early exit modules in the i^{th} stage based on the received first feature tensor of the i^{th} stage, to obtain the plurality of trained second modules in the i^{th} stage and the trained early exit modules in the i^{th} stage. The second device processes the first feature tensor of the i^{th} stage via the plurality of trained second modules in the i^{th} stage, to obtain a first probability distribution of the i^{th} stage. The second device sends the first probability distribution of the i^{th} stage to the device A.

In a possible implementation of the second aspect, the i^{th} stage includes one or more iteration processes. In a j^{th} iteration process of the i^{th} stage, that the second device trains the plurality of second modules in the i^{th} stage and the early exit module in the i^{th} stage based on the received first feature tensor of the i^{th} stage includes: The second device obtains an output probability distribution of each early exit module in the j^{th} iteration process based on a first feature tensor of the j^{th} iteration process, where j is a positive integer. The second device updates the second module in the j^{th} iteration process and the early exit module in the j^{th} iteration process based on each output probability distribution, a weight corresponding to each output probability distribution, and a label corresponding to the first feature tensor of the j^{th} iteration process, to obtain the trained second module in the j^{th} iteration process and the trained early exit module in the j^{th} iteration process.

In a possible implementation of the second aspect, the method further includes: The second device obtains device performance information of the device A and/or performance information of communication between the device A and the second device. The second device determines a target network in the device A based on the device performance information of the device A and/or the performance information of the communication between the device A and the second device.

In a possible implementation of the second aspect, the method further includes: The second device receives a second feature tensor from the device A, where the second feature tensor is a feature tensor output by a target module in the device A based on to-be-processed data, and the target module is a trained first module in the device A or a trained second module in the device A. The second device obtains a target prediction result based on the received second feature tensor via a second module that is in the plurality of trained second modules and that is after the target module. The second device sends the target prediction result to the device A.

A third aspect of this application provides a neural network training system. The system includes a plurality of first devices and a second device, and the system has a function of implementing the method according to any one of the first aspect or the possible implementations of the first aspect. The function may be implemented by hardware, or may be implemented by hardware executing corresponding software. The hardware or the software includes one or more modules corresponding to the foregoing function, for example, an interface module (for example, a first interface module and a second interface module) and a processing module (for example, a first processing module and a second processing module).

A fourth aspect of this application provides a neural network training system. The neural network training system includes a plurality of first devices and a second device. Both the plurality of first devices and the second device include a processor and a storage. The storage stores computer-executable instructions that can be run on the processor. When the computer-executable instructions are executed by the processor, the processor performs the method according to any one of the first aspect or the possible implementations of the first aspect.

A fifth aspect of this application provides a computer-readable storage medium that stores one or more computer-executable instructions. When the computer-executable instructions are executed by a processor, the processor performs the method according to any one of the first aspect or the possible implementations of the first aspect.

A sixth aspect of this application provides a computer program product that stores one or more computer-executable instructions. The computer program product includes the computer-executable instructions. When the computer-executable instructions are executed by a processor, the processor performs the method according to any one of the first aspect or the possible implementations of the first aspect.

A seventh aspect of this application provides a chip system. The chip system includes a processor, configured to support a neural network training system in implementing the function according to any one of the first aspect or the possible implementations of the first aspect. In a possible design, the chip system may further include a storage. The storage is configured to store necessary program instructions and data. The chip system may include a chip, or may include a chip and another discrete device.

An eighth aspect of this application provides a neural network training apparatus. The apparatus has a function of implementing the method according to any one of the second aspect or the possible implementations of the second aspect. The function may be implemented by hardware, or may be implemented by hardware executing corresponding software. The hardware or the software includes one or more modules corresponding to the foregoing function, for example, a second interface module and a second processing module.

A ninth aspect of this application provides a second device. The second device includes a processor and a storage. The storage stores computer-executable instructions that can be run on the processor. When the computer-executable instructions are executed by the processor, the processor performs the method according to any one of the second aspect or the possible implementations of the second aspect.

A tenth aspect of this application provides a computer-readable storage medium that stores one or more computer-executable instructions. When the computer-executable instructions are executed by a processor, the processor performs the method according to any one of the second aspect or the possible implementations of the second aspect.

An eleventh aspect of this application provides a computer program product that stores one or more computer-executable instructions. The computer program product includes the computer-executable instructions. When the computer-executable instructions are executed by a processor, the processor performs the method according to any one of the second aspect or the possible implementations of the second aspect.

A twelfth aspect of this application provides a chip system. The chip system includes a processor, configured to support a second device in implementing the function according to any one of the second aspect or the possible implementations of the second aspect. In a possible design, the chip system may further include a storage. The storage is configured to store necessary program instructions and data. The chip system may include a chip, or may include a chip and another discrete device.

For technical effects achieved by any one of the second aspect to the twelfth aspect or the possible implementations of the second aspect to the twelfth aspect, refer to the technical effects achieved by the first aspect or the related possible implementations of the first aspect. Details are not described herein again.

### BRIEF DESCRIPTION OF DRAWINGS

FIG. 1 is an example diagram of a data center according to an embodiment of this application;
FIG. 2 is an example diagram of a system architecture according to an embodiment of this application;
FIG. 3 is an example diagram of a processing stage according to an embodiment of this application;
FIG. 4 is a diagram of an embodiment of a neural network training method according to an embodiment of this application;
FIG. 5 is a diagram of an embodiment of a neural network training method according to an embodiment of this application;
FIG. 6 is an example diagram of a system architecture according to an embodiment of this application;
FIG. 7 is an example diagram of a curve that describes a correspondence between prediction accuracy and time consumed for prediction of at least one early exit module under different preset confidences according to an embodiment of this application;
FIG. 8 is an example diagram of a system architecture according to an embodiment of this application;
FIG. 9 is a diagram of an embodiment of a neural network training system according to an embodiment of this application;
FIG. 10 is a diagram of an embodiment of a neural network training apparatus according to an embodiment of this application;
FIG. 11 is a diagram of a structure of a compute device according to an embodiment of this application;
FIG. 12 is a diagram of a structure of a compute device cluster according to an embodiment of this application;
FIG. 13 is a diagram of a structure of a compute device cluster according to an embodiment of this application;
FIG. 14 is a diagram of a structure of a compute device according to an embodiment of this application;
FIG. 15 is a diagram of a structure of a compute device cluster according to an embodiment of this application; and
FIG. 16 is a diagram of a structure of a compute device cluster according to an embodiment of this application.

### DESCRIPTION OF EMBODIMENTS

The following describes embodiments of this application with reference to the accompanying drawings in embodiments of this application. Terms used in implementations of this application are merely used to explain specific embodiments of this application, but are not intended to limit this application.

The following describes embodiments of this application with reference to the accompanying drawings in embodiments of this application. Terms used in implementations of this application are merely used to explain specific embodiments of this application, but are not intended to limit this application.

A person of ordinary skill in the art may learn that, with development of technologies and emergence of a new scenario, the technical solutions provided in embodiments of this application are also applicable to a similar technical problem.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following items" or a similar expression thereof means any combination of these items, including any combination of singular items or plural items. In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, and this is merely a discrimination manner used when objects having a same attribute are described in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, product, or device.

Embodiments of this application relate to application of a neural network. Therefore, for ease of understanding, the following first describes related terms and related concepts such as the neural network in embodiments of this application.

### (1) Neural network

The neural network may include a neuron. The neuron may be an operation unit that uses xs (namely, input data) and an intercept of 1 as an input. An output of the operation unit may be as follows: ${h}_{W , b} \left(x\right) = f \left({W}^{T}x\right) = f \left({\sum }_{s = 1}^{n} {W}_{s} {x}_{s} + b\right)$

s=1, 2, ..., n, n is a natural number greater than 1, Ws is a weight of xs, and b is a bias of the neural unit. f is an activation function (activation function) of the neuron, and is used to introduce a non-linear characteristic into the neural network, to convert an input signal in the neuron into an output signal. The output signal of the activation function may be used as an input of a next convolutional layer, and the activation function may be a sigmoid function. The neural network is a network formed by connecting a plurality of single neural units together. To be specific, an output of a neural unit may be an input of another neural unit. An input of each neuron may be connected to a local receptive field of a previous layer to extract a feature of the local receptive field. The local receptive field may be a region including several neurons.

### (2) Loss function

In a process of training a neural network, it is expected that an output of the neural network is as close as possible to a value that is truly expected to be predicted. Therefore, a predicted value of a current network and a target value that is truly expected may be compared, and then a weight vector of each layer of the neural network is updated based on a difference between the predicted value and the target value (where certainly, there is usually an initialization process before a first update, that is, parameters are preconfigured for all layers of the deep neural network). For example, if the predicted value of the network is large, the weight vector is adjusted to decrease the predicted value, and adjustment is continuously performed, until the neural network can predict a target value that is truly expected or a value that is very close to the target value that is truly expected. Therefore, "how to obtain, through comparison, the difference between the predicted value and the target value" needs to be predefined. This is the loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the neural network is a process of minimizing the loss as much as possible.

### (3) Backpropagation algorithm

A neural network may use an error backpropagation (backpropagation, BP) algorithm to correct a value of a parameter in an initial super-resolution model in a training process, so that an error loss of reconstructing the super-resolution model becomes smaller. Specifically, an input signal is transferred forward until an error loss occurs at an output, and the parameter in the initial super-resolution model is updated based on backpropagation error loss information, to make the error loss converge. The backpropagation algorithm is an error-loss-centered backpropagation motion intended to obtain a parameter, such as a weight matrix, of an optimal super-resolution model.

### (4) Federated learning

Federated learning is an artificial intelligence technology. Federated learning aims to train a neural network by jointly using data of a plurality of participants without leaking plaintext data of the plurality of participants, enabling the data to be available but invisible. In a process of training and inferring the neural network, each participant in a federated learning system follows a privacy principle that local data is not transferred out of a local area. Federated learning is an artificial intelligence technology. Federated learning aims to implement efficient machine learning between a plurality of participants on a premise of ensuring information security during big data exchange, protecting terminal data and personal data privacy, and ensuring legality and compliance.

Based on different data distributions between participants, federated learning is usually divided into horizontal federated learning and vertical federated learning.

The horizontal federated learning is specific to a scenario in which training data of different users is stored in different participants. Therefore, the horizontal federated learning aims to train an entire neural network by jointly using training data of all participants and on the basis of following the privacy principle that the local data is not transmitted out of the local area.

The vertical federated learning is to train an entire neural network by jointly using different features of a same user among participants. Different participants of the vertical federated learning have data that is in the same sample space but different feature spaces, and user data of users shared by the participants is used for secure joint modeling. The vertical federated learning has a wide application scenario in fields such as finance and advertising.

### (5) Model early exit (model early exit)

Model early exit refers to an inference acceleration technology in which early exit modules such as classifiers are added to different depth locations in a neural network, and inference is ended in advance based on difficulty of input data, to reduce redundant computing. The neural network may be considered as a multi-stage model including a plurality of layers connected in series, and a neural network to which the model early exit technology is applied may be referred to as an early-exit neural network (early-exit neural network).

It can be learned that the early exit modules such as the classifiers are added to different depth locations in the neural network may be configured to dynamically adjust inference routing. In an actual inference process, not all samples need to be predicted via the deeper neural network. For example, a shallow network can better process an overall and coarse-grained feature, and a deep network can better process a local and fine-grained feature. If a depth of a neural network does not match a feature of a sample, negative impact is caused. However, in the inference process in which the early-exit neural network is used, whether to exit the inference process in advance may be determined based on a respective capacity feature of each piece of input data, thereby significantly improving inference efficiency and improving inference accuracy.

### (6) Knowledge distillation (knowledge distillation, KD)

Knowledge distillation is a training method based on a "teacher-student network idea", in which knowledge (knowledge) included in a trained teacher model is extracted to a student model through distillation (distill). The knowledge distillation may be considered as a model compression method. In the knowledge distillation, a large-scale model may be considered as a teacher model, and knowledge extracted from the teacher model is migrated to a simple student model, in other words, migrated to a small-scale neural network. After the migration is complete, the small-scale student model can be deployed in a device with limited storage and computational power.

Embodiments of this application provide a neural network training method, so that an early-exit neural network can be flexibly deployed in a neural network training system, to flexibly perform resource scheduling and data processing based on an actual scenario, thereby improving data processing efficiency.

The neural network training method in embodiments of this application can be implemented via a neural network training system. The neural network training system may be considered as a federated learning system.

The neural network training system may include a plurality of first devices and a second device.

Each first device may be a compute device cluster including one or more compute devices. Types and quantities of compute devices included in different first devices may be the same or may be different.

The second device may alternatively be a compute device cluster including one or more compute devices.

A type of any compute device is not limited herein. For example, any compute device may be a terminal device, or may be a server, a container (container), a virtual machine (virtual machine), or the like.

In the neural network training system, types of different devices may be different.

In an example, any first device may be considered as a client device, and the second device may be configured to implement a cloud platform. In this way, in the neural network training system, one or more client devices may implement operations such as federated learning training and model deployment with reference to resources of the cloud platform.

In this example scenario, the cloud platform may provide computing, network, and storage capabilities based on services of hardware resources and software resources. For example, the cloud platform may include one or more data centers, to provide a cloud resource via the one or more data centers.

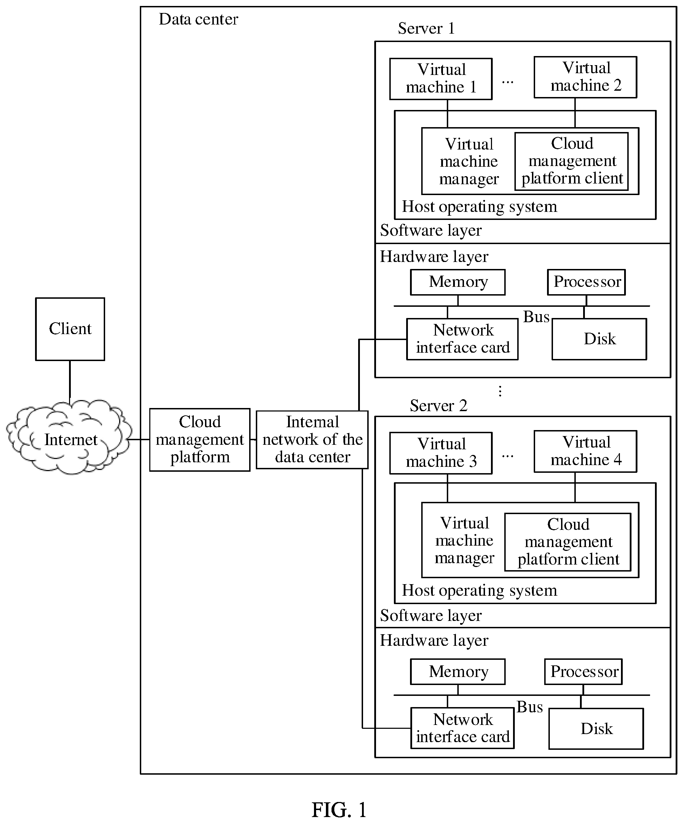

The following describes a data center with reference to a diagram of an architecture shown in FIG. 1.

In FIG. 1, in the data center, a cloud management platform exchanges information with one or more servers (for example, a server 1 and a server 2 in FIG. 1) through an internal network of the data center. The server includes a hardware layer and a software layer. The hardware layer includes a hardware configuration of the server. A PCI device may be, for example, a device that can be inserted into a peripheral component interconnect (peripheral component interconnect, PCI) or a peripheral component interconnect express (peripheral component interconnect express, PCIe) slot of the server, like a network interface card, a graphics processing unit (graphics processing unit, GPU), or an offload card. The software layer includes an operating system installed and running on the server (an operating system relative to a virtual machine may be referred to as a host operating system). A virtual machine manager (which may also be referred to as a hypervisor) is disposed in the host operating system. A function of the virtual machine manager is to implement compute virtualization, network virtualization, and storage virtualization of the virtual machine, and manage the virtual machine. The virtual machine (virtual machine) is a complete computer system that is simulated by using software, has functions of a complete hardware system, and runs in a totally isolated environment. In the system architecture shown in FIG. 1, a plurality of servers are disposed in one data center, the servers may be configured to run virtual machines, and specifications of the virtual machines may be the same or may be different. The virtual machine may also be referred to as a cloud server (elastic compute service, ECS), an elastic instance, or the like. Different cloud service providers may have different names.

In an example, the cloud platform may be a public cloud platform. In this case, a cloud service provider like an individual or a software developer that has a cloud resource development capability may provide a cloud service for a user. The user obtains the cloud service through an Internet, but does not have a cloud compute resource.

Specifically, in the example shown in FIG. 1, the cloud management platform may provide an access interface (for example, an interface or an application programming interface (application programming interface, API)), and the user of the cloud platform and the cloud service provider may operate a client to remotely access the access interface to register a cloud account and a password on the cloud management platform, and log in to the cloud management platform after the cloud account and the password are successfully authenticated by the cloud management platform, to create, manage, log in to, and operate the virtual machine in a cloud data center.

Certainly, the cloud platform may alternatively be another type of cloud platform, for example, may be a private cloud platform or a hybrid cloud platform. This is not limited in embodiments of this application.

In embodiments of this application, a first device may be in communication connection with a second device. A manner of communication connection between each first device and the second device is not limited herein. In addition, different first devices may be connected to the second device in a same communication connection manner or different communication connection manners.

In embodiments of this application, a neural network trained through federated learning is referred to as a federated neural network. A type and a structure of the federated neural network are not limited herein. For example, the federated neural network may be one or a combination of a convolutional neural network (convolutional neural network, CNN), a recurrent neural network (recurrent neural network, RNN), a residual network (residual network, ResNet), a support vector machine, a decision tree, a random forest, logistic regression, and the like. After the training is completed, functions such as image processing, text processing, or speech recognition may be implemented through the federated neural network.

In embodiments of this application, an early-exit network that can implement a model early exit technology may be constructed based on the federated neural network.

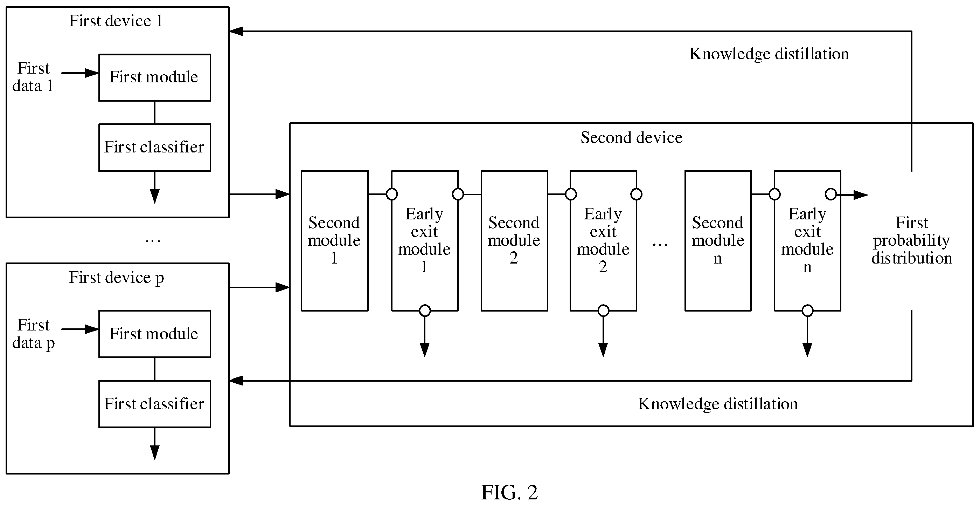

Specifically, early exit modules may be disposed at different depth locations. In an example system architecture shown in FIG. 2, a federated neural network may include but is not limited to a first module and a plurality of second modules (for example, a second module 1, a second module 2, ..., and a second module n shown in FIG. 2), and a plurality of first devices may include a first device 1 to a first device p. The first device 1 may obtain local first data 1, and the first device p may obtain local first data p. The first module may be in each first device, and the first module includes a feature extraction module. In addition, in some examples, during federated learning, the first module may be further connected to a first classifier. The plurality of second modules are in a second device, the second modules may be connected in series, and the respective second modules are connected to early exit modules (for example, an early exit module 1 to an early exit module n shown in FIG. 2), to obtain an early-exit neural network that can implement model early exit. A possible early exit node is each early exit module.

A specific structure of each second module is not limited herein. Structures and quantities of layers included in different second modules may be the same or may be different.

In some examples, a last layer of any second module may be an activation layer. In addition, in some examples, quantities of network parameters of second modules in a depth direction may be approximately the same, so that in a subsequent data processing process, a plurality of resource overhead options are provided in model early exit.

A specific structure of the early exit module is not limited herein.

For example, any early exit module may include a classifier like a fully connected layer, and may further include a pooling layer. The classifier is configured to output a prediction result, and the pooling layer may map an intermediate layer feature output by a corresponding second module to a fixed dimension, to ensure that computing overheads of classifiers in all early exit modules are the same.

In addition, for ease of training, a first classifier may be disposed in the first device, and the first classifier is connected following the first module.

In this way, a first module may be deployed in each first device. In addition, in a federated learning process, in some examples, as shown in FIG. 2, the first module may be further connected to a first classifier, and the second device may include a plurality of second modules and early exit modules connected to the respective second modules.

Based on the first module in each first device, the plurality of second modules in the second device, and the early exit modules connected to the respective second modules, a neural network training method in embodiments of this application can implement federated learning and network deployment after the federated learning. In addition, in some examples, fine-tuning may be further performed after network deployment, and a corresponding prediction task is executed after the fine-tuning.

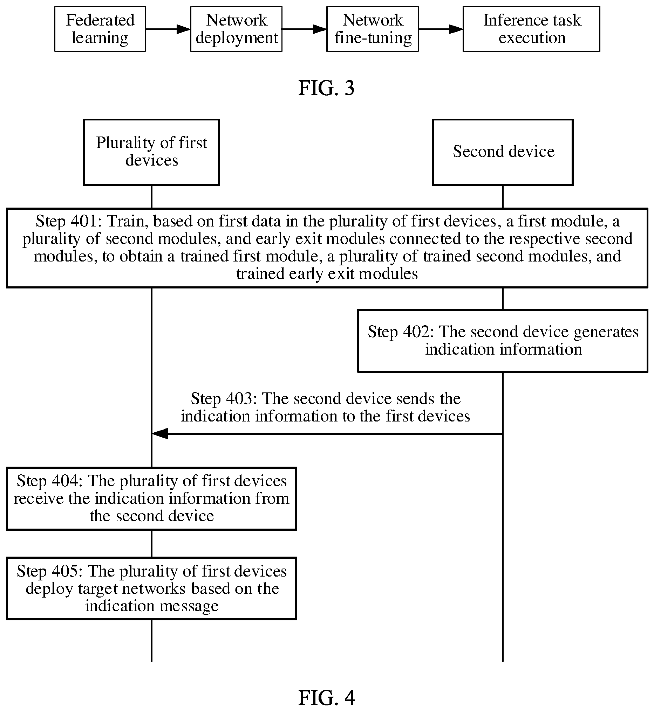

It can be learned that, as shown in FIG. 3, one or more of the following processing stages may be included in embodiments of this application:
federated learning, network deployment, network fine-tuning, and inference task execution.

The following separately describes each processing stage by using examples.

### 1. Federated learning

In some embodiments, a federated learning process may include step 401 shown in FIG. 4.

Step 401: Train, based on first data in a plurality of first devices, a first module, a plurality of second modules, and early exit modules connected to the respective second modules, to obtain a trained first module, a plurality of trained second modules, and trained early exit modules.

In this embodiment of this application, in this training process, a first feature tensor output by a first module of each first device may be transmitted to a second device, so that the second device trains a second module and an early exit module in the second device based on the first feature tensor output by the first module in the federated learning process. In addition, in some examples, in a training process, the second device may feed back information to the plurality of first devices, so that the plurality of first devices can perform training based on the information fed back by the second device, and the plurality of first devices can learn knowledge fed back by the second device.

A specific step of the training process is not limited herein. For example, a first module and a second subnetwork may be updated in each iteration process of the training process, or the second subnetwork may be iterated a plurality of times after the first module is iterated a plurality of times.

The following describes an example implementation of the training process by using federated learning between a device A in the plurality of first devices and a second device as an example.

In some embodiments, the training process includes one or more stages. The following uses an i^{th} stage as an example for description.

i is a positive integer. In other words, the i^{th} stage may be any stage in the training process, and another stage in the training process may include more steps than the i^{th} stage, may include fewer steps than the i^{th} stage, or may include a step different from the step in the i^{th} stage. This is not limited in embodiments of this application.

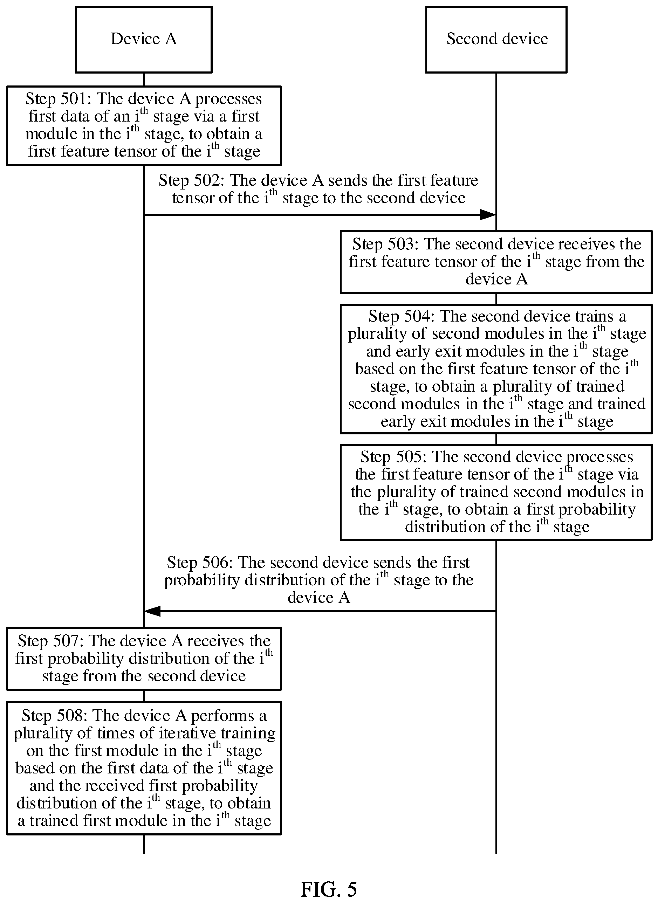

As shown in FIG. 5, in the i^{th} stage, the method includes steps 501 to 508.

Step 501: The device A processes the first data of the i^{th} stage via the first module in the i^{th} stage, to obtain a first feature tensor of the i^{th} stage.

In this embodiment of this application, the first data of the i^{th} stage may be a part or all of the first data in the device A.

In some examples, before a 1^{st} stage, the first module may be further pre-trained, and a pre-trained first module is used as a first module in the 1^{st} stage, and a first module in another stage other than the 1^{st} stage is a trained first module in a previous stage of the another stage.

In this example, in a pre-training process of the first module, one or more iterations may be performed on the first module based on the first data, to obtain the pre-trained first module as the first module in the 1^{st} stage.

In addition, in some examples, the device A sends, to the second device, the first feature tensor of the i^{th} stage and a label corresponding to the first data of the i^{th} stage.

Alternatively, in some examples, if first data used in all stages is the same, the device A may send, to the second device only in the 1^{st} stage, a label corresponding to the first data, and does not need to upload, in a stage other than the 1^{st} stage, the label corresponding to the first data.

Specific content of the label is determined based on a specific application scenario. For example, in a classification scenario, the label may be a category; while in a regression scenario, the label may be a regression result.

Step 502: The device A sends the first feature tensor of the i^{th} stage to the second device.

Step 503: The second device receives the first feature tensor of the i^{th} stage from the device A.

Step 504: The second device trains a plurality of second modules in the i^{th} stage and early exit modules in the i^{th} stage based on the first feature tensor of the i^{th} stage, to obtain a plurality of trained second modules in the i^{th} stage and trained early exit modules in the i^{th} stage.

The first feature tensor of the i^{th} stage may be used as input data of a network that includes a plurality of second modules and early exit modules connected to the respective second modules that are in the second device in the i^{th} stage.

In a process of training the second subnetwork in the i^{th} stage, one or more iterations may be performed on the plurality of second modules in the i^{th} stage and the early exit module in the i^{th} stage based on the first feature tensor of the i^{th} stage, to obtain the plurality of trained second modules in the i^{th} stage and the trained early exit module in the i^{th} stage.

For example, the i^{th} stage includes one or more iteration processes; and
in a j^{th} iteration process of the i^{th} stage, step 504 includes:

The second device obtains an output probability distribution of each early exit module in the j^{th} iteration process based on a first feature tensor of the j^{th} iteration process, where j is a positive integer.

The second device updates the second module in the j^{th} iteration process and the early exit module in the j^{th} iteration process based on each output probability distribution, a weight corresponding to each output probability distribution, and a label corresponding to the first feature tensor of the j^{th} iteration process, to obtain the trained second module in the j^{th} iteration process and the trained early exit module in the j^{th} iteration process.

In some examples, the second device obtains an output probability distribution of each early exit module in the j^{th} iteration process based on the first feature tensor in the j^{th} iteration process, and may further obtain an output probability distribution of a federated neural network.

Then, a total loss value may be calculated based on each output probability distribution, the label corresponding to the first feature tensor in the j^{th} iteration process, and a loss function. Then, gradients of the second module in the j^{th} iteration process and the early exit module in the j^{th} iteration process are obtained through backpropagation based on the total loss value, to update the second module in the j^{th} iteration process and the early exit module in the j^{th} iteration process, so as to obtain the trained second module in the j^{th} iteration process and the trained early exit module in the j^{th} iteration process.

A specific form of the loss function is not limited herein. For example, the loss function may be a cross-entropy function.

In addition, the total loss value may alternatively be calculated in a plurality of manners.

In an example, a weight may be set for each early exit module. In addition, when output probability distributions include an output probability distribution of the federated neural network, a weight may be further set for a last layer of the federated neural network. For example, weights of each early exit module and a last layer of the federated neural network may be the same, or may be changed based on depths of each early exit module and the last layer of the federated neural network.

Then, a loss value between a label and each output probability distribution in an output probability distribution of each early exit module in the j^{th} iteration process and an output probability distribution of the last layer of the federated neural network in the j^{th} iteration process is calculated, and weighted calculation is performed based on a loss value corresponding to each output probability distribution and a weight corresponding to each output probability distribution, to obtain a total loss value.

In some examples, when there are a plurality of first devices, different first devices send different quantities of first feature tensors to the second device. As a result, different first devices have different degrees of impact on the second device in a training process.

In an example, in the i^{th} stage, each first device may send a respective first feature tensor to the second device, and quantities of first feature tensors sent by the first devices may be the same or may be different.

In the j^{th} iteration process of the i^{th} stage, the plurality of second modules in the i^{th} stage and the early exit module in the i^{th} stage may be trained based on the first feature tensor corresponding to each device A in the j^{th} iteration process.

For obtaining, based on the first feature tensor corresponding to each first device in the j^{th} iteration process, gradients of the second module in the j^{th} iteration process and the early exit module in the j^{th} iteration process that correspond to each first device, refer to a manner of obtaining the gradients of the second module in the j^{th} iteration process and the early exit module in the j^{th} iteration process based on each output probability distribution, the label corresponding to the first feature tensor in the j^{th} iteration process, and the loss function in the foregoing example.

In this example, a larger quantity of first feature tensors transmitted by the second device to the second device in the j^{th} iteration process indicates more user data in the device A and usually higher importance of the device A. Therefore, impact of the device A on the total loss value is also high accordingly.

Step 505: The second device processes the first feature tensor of the i^{th} stage via the plurality of trained second modules in the i^{th} stage, to obtain a first probability distribution of the i^{th} stage.

After the plurality of trained second modules in the i^{th} stage are obtained, the first feature tensor of the i^{th} stage may be processed via the plurality of trained second modules in the i^{th} stage, to obtain the first probability distribution of the i^{th} stage. The first probability distribution may be a probability distribution output by processing the first feature tensor of the i^{th} stage after a network that is in the federated neural network and that is deployed in the second device is trained in the i^{th} stage.

Step 506: The second device sends the first probability distribution of the i^{th} stage to the device A.

Step 507: The device A receives the first probability distribution of the i^{th} stage from the second device.

Step 508: The device A performs a plurality of times of iterative training on the first module in the i^{th} stage based on the first data of the i^{th} stage and the received first probability distribution of the i^{th} stage, to obtain a trained first module in the i^{th} stage.

In this embodiment of this application, refer to the example shown in FIG. 3. The device A may perform knowledge distillation on the first module in the i^{th} stage based on the first probability distribution, to further improve performance of the first module in the device A via knowledge that has been learned by the plurality of second modules in the second device.

Specifically, in some embodiments, step 508 includes:

The device A performs knowledge distillation on the first module in the i^{th} stage based on the first probability distribution of the i^{th} stage and the first data of the i^{th} stage, to obtain the trained first module in the i^{th} stage, where
the knowledge distillation is implemented according to a loss function, and the loss function includes a first loss term, the first loss term is used to evaluate a similarity between a second probability distribution obtained by the first module during the knowledge distillation based on the first data of the i^{th} stage and the first probability distribution of the i^{th} stage.

The knowledge distillation is a training method based on a "teacher-student network idea", in which knowledge included in a teacher model is extracted to a student model through distillation.

In this embodiment of this application, the plurality of second modules and the early exit modules connected to the respective second modules are in the second device. The second device may be a device like a cloud platform, and therefore may have a large quantity of compute resources, and a scale of the plurality of second modules and the early exit modules connected to the respective second modules is also usually greater than that of the first module. In addition, there may be a plurality of first devices. Therefore, the plurality of second modules and the early exit modules connected to the respective second modules in the second device may learn more knowledge based on first feature tensors uploaded by the plurality of first devices than based on the first module in the single first device.

Based on this, in this embodiment of this application, the plurality of trained second modules in the i^{th} stage may be used as a teacher model, the first module in the i^{th} stage may be used as a student model, and based on the first probability distribution in a manner of knowledge distillation, the knowledge in the plurality of trained second modules in the i^{th} stage is migrated to the first module in the i^{th} stage, to obtain the trained first module in the i^{th} stage.

The knowledge distillation can be implemented according to a corresponding loss function. The loss function corresponding to the knowledge distillation may be different from the loss function used for training the plurality of second modules in the i^{th} stage and the early exit module in the i^{th} stage.

Specifically, the loss function may include a first loss item. In addition, in some examples, the loss function may further include a second loss item.

The first loss term is used to evaluate a similarity between a second probability distribution obtained by the first module during the knowledge distillation based on the first data of the i^{th} stage and the first probability distribution of the i^{th} stage.

For example, the first loss term may be a KL divergence (Kullback-Leibler divergence) loss between the second probability distribution and the first probability distribution.

The second loss term is used to evaluate a difference between the second probability distribution obtained by the first module in the i^{th} stage based on the first data of the i^{th} stage and the corresponding label during the knowledge distillation.

For example, the second loss item may be a cross-entropy loss between the second probability distribution and the corresponding label.

The knowledge distillation in the i^{th} stage may include one or more iteration processes. In other words, based on the first probability distribution and the loss function, through the one or more iteration processes, the knowledge in the plurality of trained second modules in the i^{th} stage is migrated to the first module in the i^{th} stage, to obtain the trained first module in the i^{th} stage.

Training in one or more stages is performed with reference to the steps in the i^{th} stage, until a quantity of training times reaches a quantity threshold, or until the first module, the plurality of second modules, and the early exit modules connected to the respective second modules converge to an expected state, to complete the foregoing federated learning, so that the device A obtains the trained first module, and the second device obtains the plurality of trained second modules and the trained early exit modules.

### 2. Network deployment

In some embodiments, as shown in FIG. 4, after the trained first module, the plurality of trained second modules, and the trained early exit modules are obtained, steps 402 to 405 may be performed in the neural network training method, to implement the network deployment in the device A.

Specifically, in step 402, the second device generates indication information.

The indication information indicates the plurality of first devices to deploy respective target networks, the target network deployed by a device A in the plurality of first devices includes a module A in the plurality of trained second modules and the trained early exit module connected to the module A, and the target network deployed by a device B in the plurality of first devices includes a module B in the plurality of trained second modules and the trained early exit module connected to the module B.

After obtaining the trained first module, the trained second modules, and the trained early exit modules, the second device may determine a division manner of the early-exit neural network obtained through federated learning, and determine, based on the division manner, a respective target network to be deployed by each first device, to generate the indication information, to indicate each first device to deploy the network based on the indication information.

There may be a plurality of specific manners of determining the target network. For example, the device A is used as an example. The second device may determine, based on one or more of information such as device performance of the device A and/or performance of communication between the device A and the second device, a network data amount suitable for a case of the device A, to determine a module included in a target network.

The following uses the device performance and/or communication performance of the device A as an example to describe specific manners of determining the target network.
(1) Determine the target network in the device A based on the device performance information of the device A.

In this example, the second device may determine the target network based on the device performance information of the device A, the trained second modules, and the trained early exit modules.

The device performance information of the device A may indicate one or more of computing performance (for example, a quantity of processors and a processing delay) of the device A, storage performance (a size of a storage device such as a memory or a hard disk in the device A), and the like, to reflect resource statuses such as a compute resource and/or a storage resource of the device A.

A manner in which the second device obtains the device performance information of the device is not limited herein.

In an example, the second device may obtain the device performance information of the device A from another device (for example, an electronic device that manages the device A).

In another example, the device A may send the device performance information of the device A to the second device.

The device A may collect the device performance information of the device A in the federated learning process in step 401, for example, device performance information such as a computing delay and an average free memory size of the device A, and after the federated learning ends or in the federated learning process, send the device performance information of the device A to the second device.

For example, the device performance information may be used to evaluate a total data amount that can be carried and efficiently run by the device A. In this case, the second device may determine, based on data amounts of parameters of the plurality of trained second modules and the trained early exit modules, a target network that meets the resource statuses of the device A, and generate the indication information based on the target network. Alternatively, the device performance information may be used to evaluate a data amount that can be carried and efficiently run by the device A excluding the first module. In this case, the second device may determine, based on the plurality of trained second modules and the trained early exit modules, a target network that meets the resource statuses of the device A, and generate indication information about the device A based on the target network.

It can be learned that the target network that meets the resource statuses of the device A may be determined based on the device performance information, so that in a subsequent inference process, the compute resource, the storage resource, and the like of the device A can meet a requirement of the subsequent inference process, thereby improving efficiency of the overall inference process.

(2) Determine the target network in the device A based on performance information of communication.

In this example, the second device may determine the target network in the device A based on performance information of communication between the device A and the second device, the plurality of trained second modules, and the trained early exit modules.

In an example, the second device may collect the performance information of the communication based on a communication status between the second device and the device A.

In another example, the device A may send the performance information of the communication between the device A and the second device to the second device.

The performance information of the communication may reflect a communication rate between the device A and the second device.

For example, the performance information of the communication may include a communication bandwidth between the device A and the second device.

When the performance information of the communication indicates that the communication rate between the device A and the second device is low, the second device tends to make an output data amount of the target network deployed by the device A small, so that in a subsequent application process, an amount of data to be transmitted between the device A and the second device is reduced.

When the performance information of the communication indicates that the communication rate between the device A and the second device is high, the second device tends to make an output data amount of the target network deployed by the device A large, so that in a subsequent application process, even if an amount of data to be transmitted between the device A and the second device is large, long transmission time is not caused.

It can be learned that the target network is determined based on the performance information of the communication, so that after the target network is deployed, in an inference process, an amount of data that may be transmitted between the device A and the second device does not cause long transmission time, thereby improving efficiency of the overall inference process.

There may be a plurality of cases for the target network. This is not limited herein.

In an example, the indication information of the second device indicates that only a trained first module is deployed in a specific first device, and a trained second module and a trained early exit module do not need to be deployed. In this example, it may be considered that a target network in the first device includes only the trained first module.

In another example, the target network in the first device may include one or more levels of early exit branches, to be specific, include at least one trained second module and an early exit module connected to the at least one second module. In addition, a trained first module is further deployed in the first device.

When a target network in a specific first device includes at least one trained second module and an early exit module connected to the at least one second module, the indication information may include the at least one trained second module and the early exit module connected to the at least one second module in the target network.

When a target network in a specific first device includes only a trained first module, but does not include a second module or an early exit module, the indication information may include only an instruction, to indicate that only the trained first module needs to be deployed in the device A.

It may be understood that in the plurality of first devices, respective target networks of two specific first devices may be the same or may be different.

A device A and a device B in the plurality of first devices are used as an example. A target network in the device A is different from that of the device B.

Specifically, the target network deployed by the device A in the plurality of first devices includes the module A in the plurality of trained second modules and the trained early exit module connected to the module A, and the target network deployed by the device B in the plurality of first devices includes the module B in the plurality of trained second modules and the trained early exit module connected to the module B. The module A is different from the module B.

The device A may include more or fewer second modules and corresponding early exit modules than the device B.

For example, if the device A includes more second modules than the device B, the target network deployed by the device A includes a module A in the plurality of trained second modules and the trained early exit module connected to the module A, and the module B in the plurality of trained second modules and the trained early exit module connected to the module B. The target network deployed by the device B does not include the module A in the plurality of trained second modules and the trained early exit module connected to the module A.

Step 403: The second device sends the indication information to the plurality of first devices.

The second device may separately send indication information of a corresponding first device to each first device. To be specific, the second device may send indication information of the device A to the device A, and send indication information of the device B to the device B, where the indication information of the device A is different from that of the device B.

Step 404: The plurality of first devices receive the indication information from the second device.

Step 405: The plurality of first devices deploy the target networks based on the indication message.

In some examples, in the federated learning process, the first module may be connected to a first classifier, to train the first module via the first classifier. During the deployment, the target network may not include the first classifier connected to the trained first module.

For the device A, the device A may receive, from the second device, the module A in the plurality of trained second modules and the trained early exit module connected to the module A, and perform deployment.

For the device B, the device B may receive, from the second device, the module B in the plurality of trained second modules and the trained early exit module connected to the module B.

It can be learned that, in this embodiment of this application, in the federated learning process, the second device may include a plurality of early exit nodes, and each early exit node corresponds to one second module and a corresponding early exit module connected to the second module.

In this way, after the federated learning, when a target network is deployed in the first device, a structure of the target network may be in a plurality of forms based on the plurality of early exit nodes. In other words, target networks of different structures may be flexibly deployed in different first devices. Specifically, the target network deployed by the device A in the plurality of first devices includes the module A in the plurality of trained second modules and the trained early exit module connected to the module A, and the target network deployed by the device B in the plurality of first devices includes the module B in the plurality of trained second modules and the trained early exit module connected to the module B.

It can be learned that a deployment manner of the target network in the first device is flexible, and the target network may be deployed based on a requirement of a current scenario. For example, flexible scheduling may be performed based on current resource statuses, so that each first device can implement efficient data processing through a target network of an appropriate scale.

It may be understood that structures of target networks deployed in different devices may be the same or may be different.

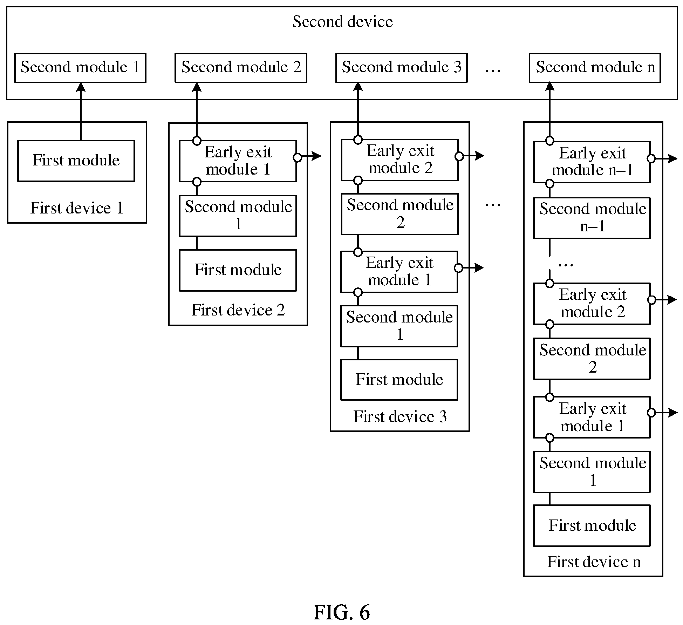

For example, FIG. 6 is a diagram of an example structure of a system architecture after network deployment.

Device performance of a first device 1, device performance of a first device 2, device performance of a first device 3, and device performance of a first device n are sequentially enhanced. In this case, the first device 1, the first device 2, the first device 3, and the first device n respectively correspond to different target networks. For example, it may be considered that the first device 2 is a device A, and the first device 3 is a device B.

The first device 1 includes only the first module, and a back-end network corresponding to a target network in the first device 1 includes all second modules in a second device. The first device 2 includes a first module, and further includes one level of early exit branch, where the early exit branch includes a second module 1 and an early exit module 1. A back-end network corresponding to a target network in the first device 2 includes a second module 2 in the second device and a subsequent second module. The first device 3 includes two levels of early exit branches; and a back-end network corresponding to a target network in the first device 3 includes a second module 3 in the second device and a subsequent second module. The first device n includes (n-1) levels of early exit branches; and a back-end network corresponding to a target network in the first device n includes a second module n in the second device and a subsequent second module.

### 3. Network fine-tuning

In some embodiments, after the deployment of the federated learning and the early-exit neural network is implemented, a target network in the first device may be further fine-tuned.

The device A is used as an example. Specifically, in some embodiments, after the device A deploys a target network based on an indication message, the method further includes:

The device A fixes a parameter of a second module in the target network, and trains an early exit module in the target network based on first data in the device A, to update the target network.

During the fine-tuning, the trained first module and the trained second module in the device A may be fixed, and a weight of the early exit module in the target network may be fine-tuned based on the local first data in the device A, to improve performance of the early exit module in the target network based on the local data in the device A, so that the early exit module in the target network can better predict a local sample in the device A.

After the target network is updated through the fine-tuning, the device A may execute an inference task based on the target network.

### 4. Inference task execution

When the inference task is executed, whether to perform early exit may be determined based on the trained early exit module deployed in the first device. For ease of description, the device A is used as an example. In a subsequent embodiment, the target network deployed by the device A and a back-end network corresponding to the target network in the second device are referred to as an early-exit neural network. A back-end network corresponding to the target network in the device A may include a second module after a last second module of the target network in a federated neural network.

The following describes an inference scenario of the device A.

In some embodiments, the method further includes:

The device A obtains to-be-processed data.

The device A obtains a first prediction result that is from at least one early exit module in the target network and that is about the to-be-processed data.

The device A obtains a target prediction result of the to-be-processed data based on an early exit condition and the first prediction result.

The early exit condition includes a confidence threshold.

The confidence threshold is determined based on one or more of the following information:
prediction accuracy of at least one early exit module in the device A, time consumed for prediction of the at least one early exit module in the device A, and performance of the communication between the device A and the second device.

The following first describes a specific configuration manner of the early exit condition.

The early exit condition may include a confidence threshold, and the confidence threshold may be determined based on a pre-confidence test result, a user configuration, and the like.

For example, a correspondence between prediction accuracy and time consumed for prediction of the at least one early exit module under different preset confidences may be tested in advance.

For example, it may be determined that the preset confidence is 0.8, and then a maximum confidence in an output probability distribution of each early exit branch in the target network is obtained from a local dataset (for example, including 1000 samples) of the device A. If a maximum confidence corresponding to a specific early exit branch is greater than the preset confidence, it may be determined that early exit is implemented through the early exit branch, and a corresponding prediction result is obtained. Each sample in the local dataset is traversed, so that when the preset confidence is 0.8, time consumed for prediction (which may also be considered as an end-to-end delay) of each sample in this inference process can be obtained, and an average value of time consumed for prediction corresponding to the samples is used as time consumed for prediction of the early-exit neural network. In addition, when the preset confidence is 0.8, prediction accuracy of the early-exit neural network may be obtained based on a prediction result corresponding to each sample and a corresponding label.

Then, another value of the preset confidence may be determined, and with reference to this test process when the preset confidence is 0.8, prediction accuracy and time consumed for prediction of the early-exit neural network are obtained when the another value of the preset confidence is obtained.

In this way, a curve that describes a correspondence between prediction accuracy and time consumed for prediction of the at least one early exit module under different preset confidences may be obtained.

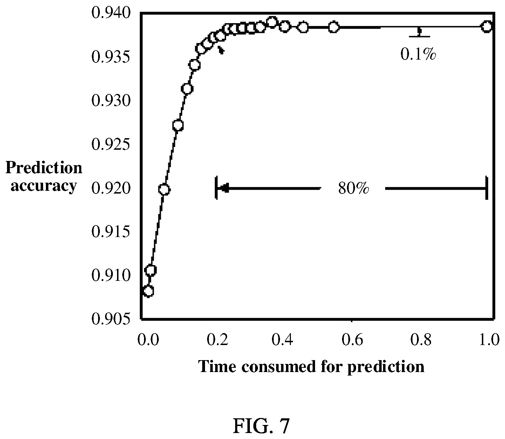

For example, FIG. 7 is an example diagram of the curve.

In the example shown in FIG. 7, a horizontal axis may reflect the time consumed for prediction of the early-exit neural network, and a vertical axis represents the prediction accuracy of the early-exit neural network. Each point in the curve corresponds to a preset confidence, and the preset confidence may be an attribute of the point, but is not shown in the curve in FIG. 7.

It can be learned from the test that, in the curve in FIG. 7, when the preset confidence is low, the prediction accuracy of the early-exit neural network is low. However, because early exit can be usually implemented in a shallow early exit module, a possibility of implementing early exit is high, and time consumed for prediction is short; or when the preset confidence is high, the prediction accuracy of the early-exit neural network is high. Because early exit usually needs to be implemented in a deep early exit module, a possibility of implementing early exit is low, and time consumed for prediction is long.

Certainly, in some other examples, the confidence threshold may be determined via information in another form. For example, a curve of relationships between different preset confidences and prediction accuracy of an early exit module and a curve of relationships between different preset confidences and time consumed for prediction may be separately constructed, to determine a confidence threshold in the current scenario based on the two curves.

After obtaining the correspondence between the prediction accuracy and the time consumed for prediction of the at least one early exit module under different preset confidences, a user may determine the confidence threshold in the early exit condition from a plurality of preset confidences based on a scenario requirement.

For example, the user may determine the confidence threshold from the plurality of preset confidences with reference to the correspondence between the prediction accuracy and the time consumed for prediction of the at least one early exit module under different preset confidences described in the example shown in FIG. 7 and based on a requirement on the prediction accuracy and/or the time consumed for prediction in an actual scenario.

In addition, in some examples, the confidence threshold may alternatively be determined based on the performance of the communication between the device A and the second device. For example, if the performance of the communication is poor, it may be considered that the prediction is completed in the device A as much as possible, to reduce a possibility of data transmission between the device A and the second device. In this case, a small confidence threshold may be determined.

In this embodiment of this application, a manner of determining, based on the early exit condition, whether the first prediction result meets the early exit condition, to determine the target prediction result may include the following two cases.

### (1) Model early exit is implemented.

The early exit condition may include a confidence threshold. The device A may sequentially obtain, along a depth direction, first prediction results output by the early exit modules, and determine, each time one first prediction result is obtained, that the first prediction result meets the early exit condition.

Any first prediction result may include a probability distribution. If a maximum confidence in a specific first prediction result is greater than the confidence threshold, it indicates that a trustworthiness degree of the first prediction result is high, and the first prediction result meets the early exit condition. The first prediction result that meets the early exit condition may be used as a target prediction result, so that model early exit is implemented.

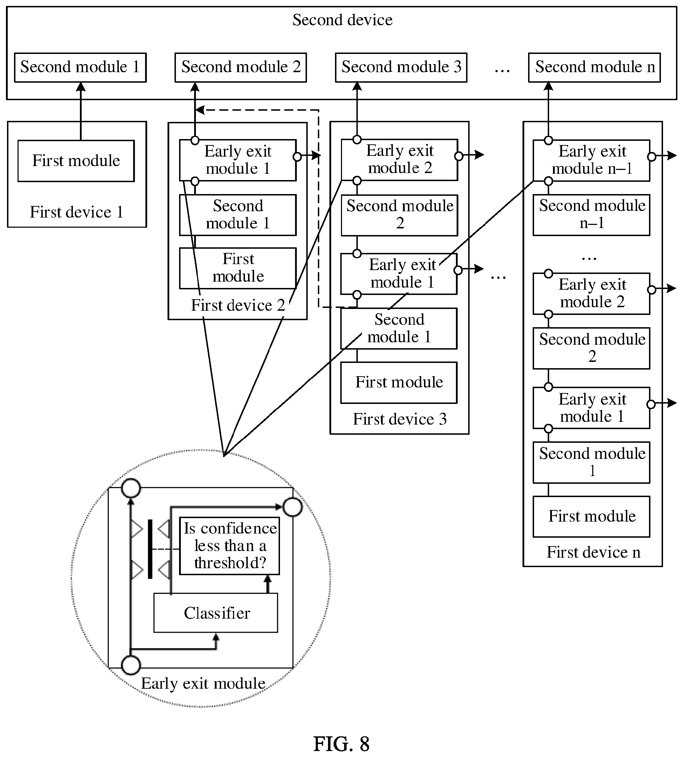

In an example shown in FIG. 8, the device A is a first device n, an early exit module n-1 in the first device n includes a classifier, and the classifier is configured to output a first prediction result of the early exit module n-1.

Then, when a maximum confidence in the first prediction result of the early exit module n-1 is greater than the confidence threshold, the first prediction result of the early exit module n-1 is used as a target prediction result.

### (2) Model early exit cannot be implemented.

If each first prediction result is not greater than a confidence threshold, it indicates that model early exit cannot be implemented through the target network in the device A. In this case, the target prediction result may be obtained through the target network in the device A and a back-end network corresponding to the target network in the second device.

In an example, an output of a second module at a last layer of the target network in the device A may be transmitted to the second device, and the target prediction result may be then obtained in the back-end network of the second device based on the target network in the device A.

In an example shown in FIG. 8, the device A is a first device 2, an early exit module 1 in the first device 2 includes a classifier, and the classifier is configured to output a first prediction result of the early exit module 1.

Then, when a maximum confidence in a first prediction result of the early exit module 1 is not greater than the confidence threshold, the first prediction result of the early exit module 1 is uploaded to the second device, so that a target prediction result is obtained via a trained second module 2 and a subsequent module in the second device, and is then returned to the first device 2.

In another example, that the device A obtains the target prediction result of the to-be-processed data based on the early exit condition and the first prediction result includes:

If no first prediction result meets the early exit condition, the device A sends a second feature tensor to the second device.

The second device obtains the target prediction result based on the received second feature tensor via a second module that is in the plurality of trained second modules and that is after a target module.

The second device sends the target prediction result to the device A.

The device A receives the target prediction result from the second device.

The second feature tensor is a feature tensor output by a target module in the device A based on the to-be-processed data, the target module is a trained first module in the device A or a trained second module in the device A, and the target module is determined based on one or more of the following information: a dimension of output data of the trained first module in the device A, a dimension of output data of the trained second module in the device A, and performance of the communication between the device A and the second device.

It can be learned that, in this example, when early exit cannot be performed, an output of the device A may be flexibly determined from an output of the trained first module of the device A and an output of the second module in the target network, so that corresponding inference performance is optimal (for example, an end-to-end delay of the inference process is optimal).

The target module may be determined from the trained first module of the device A and the second module in the target network, so that a dimension of the second feature tensor output by the target module meets a performance status of the communication between the device A and the second device.

Specifically, if the performance of the communication between the device A and the second device is good, the dimension of the determined second feature tensor output by the target module may be large; or if the performance of the communication between the device A and the second device is poor, the dimension of the determined second feature tensor output by the target module may be small.

In this way, time consumed when the second feature tensor output by the target module is transmitted between the device A and the second device is not long, ensuring a short end-to-end inference delay.

The target module may be a first module, or may be a shallow module or a deep module in the target network. This is not limited herein.

In an example, when the second device is configured to implement a cloud platform, considering that resources of the cloud platform are usually sufficient, when the dimension of the second feature tensor matches the performance of the communication between the device A and the second device, the target module may be a shallow module, so that an inference process of the back-end network of the target module is completed at a high speed by fully using the resources of the cloud platform, to obtain the target prediction result, thereby improving end-to-end inference efficiency.

In an example shown in FIG. 8, the device A is a first device 3, a maximum confidence in a first prediction result output by a classifier in an early exit module 2 in the first device 3 is not greater than the confidence threshold, and performance of communication between the first device 3 and the second device is poor. In addition, if a feature tensor output by a second module 1 is less than a feature tensor output by a second module 2, a feature tensor output by a second module 1 in the first device 3 may be uploaded to the second device in short time, so that a target prediction result is obtained via a trained second module 2 and a subsequent module in a second subnetwork in the second device, and is then returned to the first device 3.

In addition, in some embodiments, when a specific first device includes only a trained first module, a trained second module, and a trained early exit module, a target prediction result may be obtained based on an output of the trained first module.

In an example, a trained first module and a trained first classifier may be deployed in a specific first device.

If a maximum confidence output by the trained first classifier is greater than the confidence threshold, an output of the trained first classifier may be used as the target prediction result.

However, in some other examples, it is usually difficult for the trained first module to obtain a high-precision prediction result. Therefore, the target prediction result may be obtained via the trained first module in the first device and a back-end network that is in the second device and that corresponds to the first module.

Specifically, the method further includes:
The first device obtains to-be-processed data.

The first device obtains a third feature tensor that is from the trained first module and that is about the to-be-processed data.

The first device sends the third feature tensor to the second device.

The second device receives the third feature tensor from the first device.

The second device obtains the target prediction result based on the third feature tensor via the trained second module.

The second device sends the target prediction result to the first device.

The first device receives the target prediction result from the second device.

In the example shown in FIG. 8, after obtaining the third feature tensor that is from the trained first module and that is about the to-be-processed data, the first device 1 uploads the third feature tensor to the second device, so that the target prediction result is obtained via the plurality of trained second modules in the second device, and is returned to the first device 1.

The foregoing describes the neural network training method provided in embodiments of this application from a plurality of aspects. The following describes a neural network training system provided in embodiments of this application with reference to the accompanying drawings.

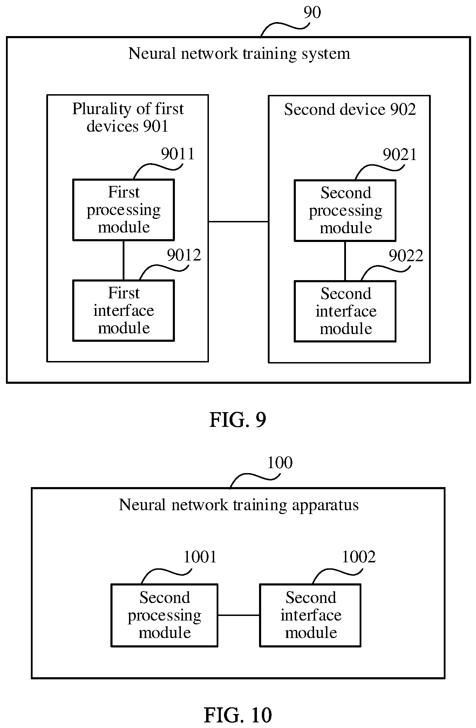

As shown in FIG. 9, an embodiment of this application provides a neural network training system 90. The neural network training system 90 includes a plurality of first devices 901 and a second device 902. A first module in a federated neural network is deployed in each of the plurality of first devices 901. The first module includes a feature extraction module. A plurality of second modules in the federated neural network and early exit modules connected to the respective second modules are deployed in the second device 902. The plurality of first devices 901 include a first processing module 9011 and a first interface module 9012. The second device 902 includes a second processing module 9021 and a second interface module 9022.

The plurality of first devices 901 and the second device 902 are configured to train, based on first data in the plurality of first devices, the first module, the plurality of second modules, and the early exit modules connected to the respective second modules, to obtain a trained first module, a plurality of trained second modules, and trained early exit modules.

The first interface module 9012 is configured to receive indication information from the second device, where the indication information indicates the plurality of first devices to deploy respective target networks, the target network deployed by a device A in the plurality of first devices includes a module A in the plurality of trained second modules and the trained early exit module connected to the module A, and the target network deployed by a device B in the plurality of first devices includes a module B in the plurality of trained second modules and the trained early exit module connected to the module B.

The first processing module 9011 is configured to deploy the target networks based on the indication message.

Optionally, a training process includes one or more stages.

In an i^{th} stage, the first processing module 9011 is configured to process the first data of the i^{th} stage via the first module in the i^{th} stage, to obtain a first feature tensor of the i^{th} stage, where i is a positive integer.

The first interface module 9012 is configured to send the first feature tensor of the i^{th} stage to the second device.

The second processing module 9021 is configured to:
train the plurality of second modules in the i^{th} stage and the early exit modules in the i^{th} stage based on the received first feature tensor of the i^{th} stage, to obtain the plurality of trained second modules in the i^{th} stage and the trained early exit modules in the i^{th} stage; and
process the first feature tensor of the i^{th} stage via the plurality of trained second modules in the i^{th} stage, to obtain a first probability distribution of the i^{th} stage.

The second interface module 9022 is configured to send the first probability distribution of the i^{th} stage to the device A.

The first processing module 9011 is configured to perform a plurality of times of iterative training on the first module in the i^{th} stage based on the first data of the i^{th} stage and the received first probability distribution of the i^{th} stage, to obtain a trained first module in the i^{th} stage.

Optionally, the first processing module 9011 is configured to perform knowledge distillation on the first module in the i^{th} stage based on the first probability distribution of the i^{th} stage and the first data of the i^{th} stage, to obtain the trained first module in the i^{th} stage, where
the knowledge distillation is implemented according to a loss function, and the loss function includes a first loss term, the first loss term is used to evaluate a similarity between a second probability distribution obtained by the first module during the knowledge distillation based on the first data of the i^{th} stage and the first probability distribution of the i^{th} stage.

Optionally, the second interface module 9022 is configured to obtain device performance information of the device A and/or performance information of communication between the device A and the second device.

The second processing module 9021 is configured to determine a target network in the device A based on the device performance information of the device A and/or the performance information of the communication between the device A and the second device.

Optionally, the first processing module 9011 is configured to: fix a parameter of the second module in the target network, and train the early exit module in the target network based on the first data in the device A, to update the target network.

Optionally, the first interface module 9012 is configured to obtain to-be-processed data.

The first processing module 9011 is configured to:
obtain a first prediction result that is from at least one early exit module in the target network and that is about the to-be-processed data; and
obtain a target prediction result of the to-be-processed data based on an early exit condition and the first prediction result, where the early exit condition includes a confidence threshold; and
the confidence threshold is determined based on one or more of the following information:
   prediction accuracy of at least one early exit module in the device A, time consumed for prediction of the at least one early exit module in the device A, and performance of the communication between the device A and the second device.

Optionally, the first processing module 9011 is configured to: if any first prediction result meets the early exit condition, use, by the device A, the first prediction result that meets the early exit condition as the target prediction result.

Optionally, the first interface module 9012 is configured to: if no first prediction result meets the early exit condition, send a second feature tensor to the second device, where the second feature tensor is a feature tensor output by a target module in the device A based on the to-be-processed data, the target module is a trained first module in the device A or a trained second module in the device A, and the target module is determined based on one or more of the following information: a dimension of output data of the trained first module in the device A, a dimension of output data of the trained second module in the device A, and performance of the communication between the device A and the second device.

The second processing module 9021 is configured to obtain the target prediction result based on the received second feature tensor via a second module that is in the plurality of trained second modules and that is after the target module.

The second interface module 9022 is configured to send the target prediction result to the device A.

The first interface module 9012 is configured to receive the target prediction result from the second device.

As shown in FIG. 10, an embodiment of this application provides a neural network training apparatus 100, applied to a second device. A plurality of second modules in a federated neural network and early exit modules connected to the respective second modules are deployed in the second device. A first module in the federated neural network is deployed in each of a plurality of first devices. The apparatus 100 includes a second processing module 1001 and a second interface module 1002.

The second interface module 1002 is configured to receive respective first feature tensors from the plurality of first devices.

The second processing module 1001 is configured to train, based on the first feature tensors, the plurality of second modules and the early exit modules connected to the respective second modules, to obtain a plurality of trained second modules and trained early exit modules, where the plurality of trained second modules include a module A and a module B, and the trained early exit modules include a trained early exit module connected to the module A and a trained early exit module connected to the module B.

The second interface module 1002 is configured to send indication information to the plurality of first devices, where the indication information indicates the plurality of first devices to deploy respective target networks, the target network deployed by a device A in the plurality of first devices includes a module A in the plurality of trained second modules and the trained early exit module connected to the module A, and the target network deployed by a device B in the plurality of first devices includes a module B in the plurality of trained second modules and the trained early exit module connected to the module B.

Optionally, in an i^{th} stage:
the second interface module 1002 is configured to receive a first feature tensor of the i^{th} stage from the device A, where i is a positive integer;
the second processing module 1001 is configured to train the plurality of second modules in the i^{th} stage and the early exit modules in the i^{th} stage based on the received first feature tensor of the i^{th} stage, to obtain the plurality of trained second modules in the i^{th} stage and the trained early exit modules in the i^{th} stage;
the second processing module 1001 is configured to process the first feature tensor of the i^{th} stage via the plurality of trained second modules in the i^{th} stage, to obtain a first probability distribution of the i^{th} stage; and
the second interface module 1002 is configured to send the first probability distribution of the i^{th} stage to the device A.

Optionally, the i^{th} stage includes one or more iteration processes.

The second processing module 1001 is configured to:
obtain an output probability distribution of each early exit module in a j^{th} iteration process based on a first feature tensor of the j^{th} iteration process, where j is a positive integer; and
update the second module in the j^{th} iteration process and the early exit module in the j^{th} iteration process based on each output probability distribution, a weight corresponding to each output probability distribution, and a label corresponding to the first feature tensor of the j^{th} iteration process, to obtain the trained second module in the j^{th} iteration process and the trained early exit module in the j^{th} iteration process.

Optionally, the second interface module 1002 is configured to obtain device performance information of the device A and/or performance information of communication between the device A and the second device.

The second processing module 1001 is configured to determine a target network in the device A based on the device performance information of the device A and/or the performance information of the communication between the device A and the second device.

Optionally, the second interface module 1002 is configured to receive a second feature tensor from the device A, where the second feature tensor is a feature tensor output by a target module in the device A based on to-be-processed data, and the target module is a trained first module in the device A or a trained second module in the device A.

The second processing module 1001 is configured to obtain a target prediction result based on the received second feature tensor via a second module that is in the plurality of trained second modules and that is after the target module.

The second interface module 1002 is configured to send the target prediction result to the device A.

In this embodiment of this application, the module is used as an example of a software functional unit, and a neural network training system and/or a neural network training apparatus may include code running on a computing instance. The computing instance may be at least one of compute devices such as a physical host (compute device), a virtual machine, and a container. Further, there may be one or more compute devices. For example, the neural network training system and/or the neural network training apparatus may include code running on a plurality of hosts/virtual machines/containers. It should be noted that the plurality of hosts/virtual machines/containers configured to run the application may be distributed in a same region or may be distributed in different regions. The plurality of hosts/virtual machines/containers configured to run the code may be distributed in a same available zone (available zone, AZ), or may be distributed in different AZs. Each AZ includes one data center or a plurality of data centers that are geographically close. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is deployed in one region. A communication gateway needs to be configured in each VPC for communication between two VPCs in a same region and cross-region communication between VPCs in different regions. The VPCs are interconnected through the communication gateway.

The module is used as an example of a hardware functional unit, and the neural network training system and/or the neural network training apparatus may include at least one compute device, for example, a server. Alternatively, the neural network training system and/or the neural network training apparatus may be a device implemented by using an application-specific integrated circuit (application-specific integrated circuit, ASIC), a programmable logic device (programmable logic device, PLD), or the like. The PLD may be a complex PLD (complex PLD, CPLD), a field programmable gate array (field programmable gate array, FPGA), generic array logic (generic array logic, GAL), or any combination thereof for implementation.

A plurality of compute devices included in the neural network training system and/or the neural network training apparatus may be distributed in a same region, or may be distributed in different regions. A plurality of compute devices included in the neural network training system and/or the neural network training apparatus may be distributed in a same AZ, or may be distributed in different AZs. Similarly, a plurality of compute devices included in the neural network training system and/or the neural network training apparatus may be distributed in a same VPC, or may be distributed in a plurality of VPCs. The plurality of compute devices may be any combination of compute devices such as the server, the ASIC, the PLD, the CPLD, the FPGA, and the GAL.

It should be noted that, in another embodiment, the interface module (for example, the first interface module and/or the second interface module) may be configured to perform any step in the neural network training method, and the processing module (for example, the first processing module and/or the second processing module) may be configured to perform any step in the neural network training method. Steps that the processing module and the interface module are responsible for implementing may be specified as required. The processing module and the interface module respectively implement different steps in the neural network training method, to implement all functions of the neural network training system and/or the neural network training apparatus.

In this embodiment of this application, any one of the plurality of first devices may be a compute device cluster, and the compute device cluster includes one or more compute devices.

The following describes an example of a hardware structure of a compute device and a hardware structure of a compute device cluster when the first device is the compute device cluster.

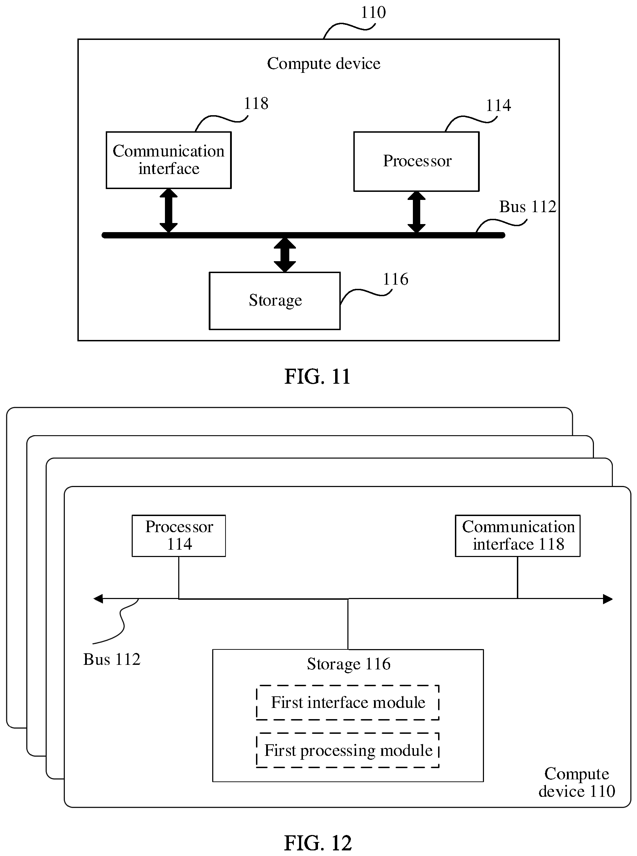

An embodiment of this application further provides a compute device 110. As shown in FIG. 11, the compute device 110 includes a bus 112, a processor 114, a storage 116, and a communication interface 118. The processor 114, the storage 116, and the communication interface 118 communicate with each other by using the bus 112. The compute device 110 may be a server or a terminal device. It should be understood that quantities of processors and storages in the compute device 110 are not limited in this application.

The bus 112 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 11, but it does not indicate that there is only one bus or only one type of bus. The bus 114 may include a path for transmitting information between components (for example, the storage 116, the processor 114, and the communication interface 118) of the compute device 110.

The processor 114 may include any one or more of processors such as a central processing unit (central processing unit, CPU), a graphics processing unit (graphics processing unit, GPU), a microprocessor (microprocessor, MP), or a digital signal processor (digital signal processor, DSP).

The storage 116 may include a volatile memory (volatile memory), for example, a random access memory (random access memory, RAM). The processor 114 may further include a non-volatile memory (non-volatile memory), for example, a read-only memory (read-only memory, ROM), a flash memory, a hard disk drive (hard disk drive, HDD), or a solid-state drive (solid-state drive, SSD).

The storage 116 stores executable program code, and the processor 114 executes the executable program code to separately implement functions of the first interface module and the first processing module, to implement the neural network training method applied to the first device (for example, the device A) in the foregoing embodiments. In other words, the storage 116 stores instructions used to perform the neural network training method applied to the first device in the foregoing embodiments.

The communication interface 118 implements communication between the compute device 110 and another device or a communication network via a transceiver module, for example, but not limited to, a network interface card or a transceiver.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

As shown in FIG. 12, the compute device cluster includes at least one compute device 110. A storage 116 in one or more compute devices 110 in the compute device cluster may store same instructions used to perform the neural network training method applied to the first device in the foregoing embodiments.

In some possible implementations, alternatively, a storage 116 in one or more compute devices 110 in the compute device cluster may separately store some instructions used to perform the neural network training method applied to the first device in the foregoing embodiments. In other words, a combination of the one or more compute devices 110 may jointly execute instructions used to perform the neural network training method applied to the first device in the foregoing embodiments.

It should be noted that storages 116 in different compute devices 110 in the compute device cluster may store different instructions respectively used to perform a part of functions of the neural network training method applied to the first device in the foregoing embodiments. In other words, the instructions stored in the storages 116 in different compute devices 110 may implement functions of one or both of the first interface module and the first processing module.

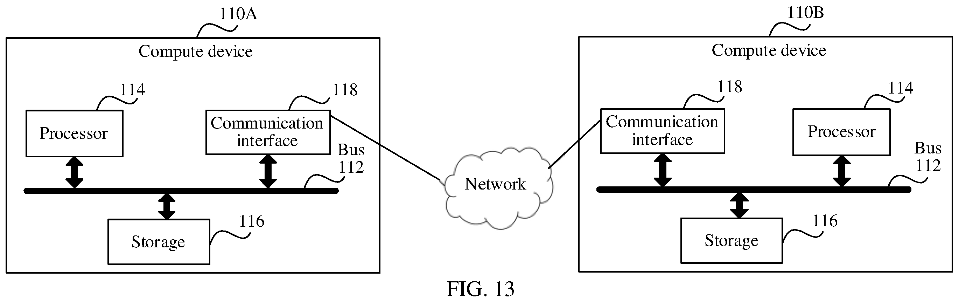

In some possible implementations, the one or more compute devices in the compute device cluster may be connected through a network. The network may be a wide area network, a local area network, or the like. FIG. 13 shows a possible implementation. As shown in FIG. 13, two compute devices 110A and 110B are connected through a network. Specifically, the compute devices are connected to the network through communication interfaces of the compute devices. In this type of possible implementation, a storage 116 in the compute device 110A may store instructions used to perform a function of the first processing module. In addition, a storage 116 in the compute device 110B may store instructions used to perform a function of the first interface module. Alternatively, a storage 116 in the compute device 110A may store instructions used to perform a part of functions of the first processing module. In addition, a storage 116 in the compute device 110B may store instructions used to perform another part of functions of the first processing module.

It should be understood that functions of the compute device 110A shown in FIG. 13 may alternatively be completed by a plurality of compute devices 110. Similarly, functions of the compute device 110B may alternatively be completed by a plurality of compute devices 110.

An embodiment of this application further provides another compute device cluster. For a connection relationship between compute devices in the compute device cluster, refer to similar connection manners of the compute device clusters in FIG. 12 and FIG. 13. A difference lies in that a storage 116 in one or more compute devices 110 in the compute device cluster may store same instructions used to perform the neural network training method applied to the first device in the foregoing embodiments.

In some possible implementations, alternatively, a storage 116 in one or more compute devices 110 in the compute device cluster may separately store some instructions used to perform the neural network training method applied to the first device in the foregoing embodiments. In other words, a combination of the one or more compute devices 110 may jointly execute instructions used to perform the neural network training method applied to the first device in the foregoing embodiments.

It should be noted that storages 116 in different compute devices 110 in the compute device cluster may store different instructions used to perform a part of functions of the neural network training method applied to the first device in the foregoing embodiments. In other words, the instructions stored in the storages 116 in different compute devices 110 may implement functions of one or both of the first interface module and the first processing module.

An embodiment of this application further provides a computer program product including instructions. The computer program product may be a software or a program product that includes instructions and that can be run on a compute device or stored in any usable medium. When the computer program product runs on at least one compute device, the at least one compute device is caused to perform the neural network training method applied to the first device in the foregoing embodiments.

An embodiment of this application further provides a computer-readable storage medium. The computer-readable storage medium may be any usable medium that can be stored by a compute device, or a data storage device like a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the compute device to perform the neural network training method applied to the first device in the foregoing embodiments.

An embodiment of this application further provides a chip system. The chip system includes a processor, and the processor is configured to implement steps performed by the compute device cluster. In a possible design, the chip system may further include a storage. The storage is configured to store necessary program instructions and data. The chip system may include a chip, or may include a chip and another discrete device.

In this embodiment of this application, the second device may be a compute device cluster, and the compute device cluster includes one or more compute devices.

The following describes an example of a hardware structure of a compute device and a hardware structure of a compute device cluster when the second device is the compute device cluster.

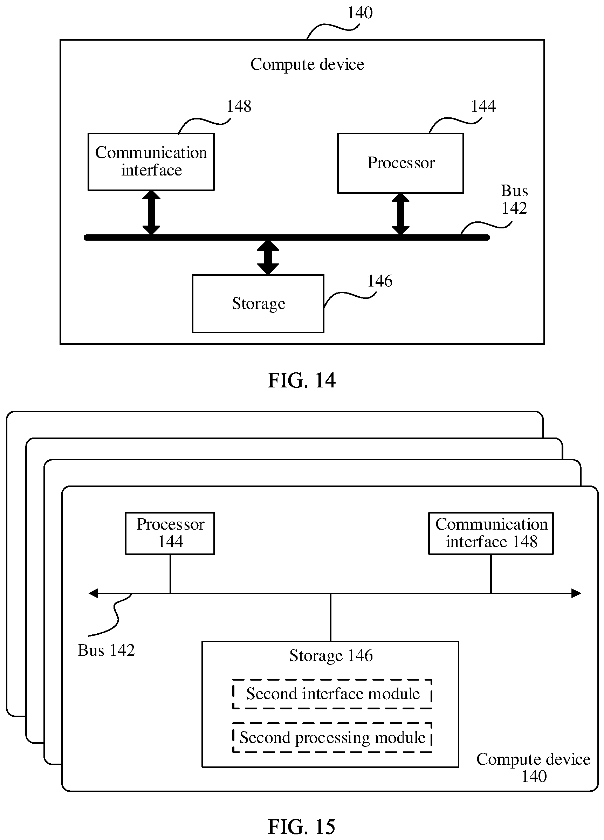

An embodiment of this application further provides a compute device 140. As shown in FIG. 14, the compute device 140 includes a bus 142, a processor 144, a storage 146, and a communication interface 148. The processor 144, the storage 146, and the communication interface 148 communicate with each other by using the bus 142. The compute device 140 may be a server or a terminal device. It should be understood that quantities of processors and storages in the compute device 140 are not limited in this application.

The bus 142 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 14, but it does not indicate that there is only one bus or only one type of bus. The bus 144 may include a path for transmitting information between components (for example, the storage 146, the processor 144, and the communication interface 148) of the compute device 140.

The processor 144 may include any one or more of processors such as a central processing unit (central processing unit, CPU), a graphics processing unit (graphics processing unit, GPU), a microprocessor (microprocessor, MP), or a digital signal processor (digital signal processor, DSP).

The storage 146 may include a volatile memory (volatile memory), for example, a random access memory (random access memory, RAM). The processor 144 may further include a non-volatile memory (non-volatile memory), for example, a read-only memory (read-only memory, ROM), a flash memory, a hard disk drive (hard disk drive, HDD), or a solid-state drive (solid-state drive, SSD).

The storage 146 stores executable program code, and the processor 144 executes the executable program code to separately implement functions of the second interface module and the second processing module, to implement the neural network training method applied to the second device in the foregoing embodiments. In other words, the storage 146 stores instructions used to perform the neural network training method applied to the second device in the foregoing embodiments.

The communication interface 148 implements communication between the compute device 140 and another device or a communication network via a transceiver module, for example, but not limited to, a network interface card or a transceiver.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

As shown in FIG. 15, the compute device cluster includes at least one compute device 140. A storage 146 in one or more compute devices 140 in the compute device cluster may store same instructions used to perform the neural network training method applied to the second device in the foregoing embodiments.

In some possible implementations, alternatively, a storage 146 in one or more compute devices 140 in the compute device cluster may separately store some instructions used to perform the neural network training method applied to the second device in the foregoing embodiments. In other words, a combination of the one or more compute devices 140 may jointly execute instructions used to perform the neural network training method applied to the second device in the foregoing embodiments.

It should be noted that storages 146 in different compute devices 140 in the compute device cluster may store different instructions respectively used to perform a part of functions of the neural network training method applied to the second device in the foregoing embodiments. In other words, the instructions stored in the storages 146 in different compute devices 140 may implement functions of one or both of the second interface module and the second processing module.

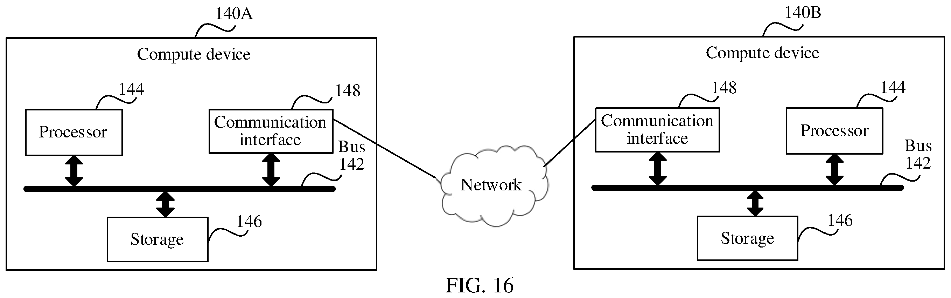

In some possible implementations, the one or more compute devices in the compute device cluster may be connected through a network. The network may be a wide area network, a local area network, or the like. FIG. 16 shows a possible implementation. As shown in FIG. 16, two compute devices 140A and 140B are connected through a network. Specifically, the compute devices are connected to the network through communication interfaces of the compute devices. In this type of possible implementation, a storage 146 in the compute device 140A may store instructions used to perform a function of the second interface module. In addition, a storage 146 in the compute device 140B may store instructions used to perform a function of the second processing module. Alternatively, a storage 146 in the compute device 140A may store instructions used to perform a part of functions of the second processing module. In addition, a storage 146 in the compute device 140B may store instructions used to perform another part of functions of the second processing module.

It should be understood that functions of the compute device 140A shown in FIG. 16 may alternatively be completed by a plurality of compute devices 140. Similarly, functions of the compute device 140B may alternatively be completed by a plurality of compute devices 140.

An embodiment of this application further provides another compute device cluster. For a connection relationship between compute devices in the compute device cluster, refer to similar connection manners of the compute device clusters in FIG. 15 and FIG. 16. A difference lies in that a storage 146 in one or more compute devices 140 in the compute device cluster may store same instructions used to perform the neural network training method applied to the second device in the foregoing embodiments.

In some possible implementations, alternatively, a storage 146 in one or more compute devices 140 in the compute device cluster may separately store some instructions used to perform the neural network training method applied to the second device in the foregoing embodiments. In other words, a combination of the one or more compute devices 140 may jointly execute instructions used to perform the neural network training method applied to the second device in the foregoing embodiments.

It should be noted that storages 146 in different compute devices 140 in the compute device cluster may store different instructions used to perform a part of functions of the neural network training method applied to the second device in the foregoing embodiments. In other words, the instructions stored in the storages 146 in different compute devices 140 may implement functions of one or both of the second interface module and the second processing module.

An embodiment of this application further provides a computer program product including instructions. The computer program product may be a software or a program product that includes instructions and that can be run on a compute device or stored in any usable medium. When the computer program product runs on at least one compute device, the at least one compute device is caused to perform the neural network training method applied to the second device in the foregoing embodiments.

An embodiment of this application further provides a computer-readable storage medium. The computer-readable storage medium may be any usable medium that can be stored by a compute device, or a data storage device like a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the compute device to perform the neural network training method applied to the second device in the foregoing embodiments.

An embodiment of this application further provides a chip system. The chip system includes a processor, and the processor is configured to implement steps performed by the compute device cluster. In a possible design, the chip system may further include a storage. The storage is configured to store necessary program instructions and data. The chip system may include a chip, or may include a chip and another discrete device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate components may or may not be physically separate, and components displayed as units may or may not be physical units, in other words, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solution of this application essentially, or the part contributing to a conventional technology, or all or some of the technical solution may be implemented in a form of a software product. The computer software product is stored in a storage medium, and includes several instructions for instructing a computer device (which may be a personal computer, a server, a network device, or the like) to perform all or some of steps in the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A neural network training method, applied to a plurality of first devices and a second device, wherein a first module in a federated neural network is deployed in each of the plurality of first devices, the first module comprises a feature extraction module, a plurality of second modules in the federated neural network and early exit modules connected to the respective second modules are deployed in the second device, and the method comprises:
training, based on first data in the plurality of first devices, the first module, the plurality of second modules, and the early exit modules connected to the respective second modules, to obtain a trained first module, a plurality of trained second modules, and trained early exit modules;
receiving, by the plurality of first devices, indication information from the second device, wherein the indication information indicates the plurality of first devices to deploy respective target networks, the target network deployed by a device A in the plurality of first devices comprises a module A in the plurality of trained second modules and the trained early exit module connected to the module A, and the target network deployed by a device B in the plurality of first devices comprises a module B in the plurality of trained second modules and the trained early exit module connected to the module B; and
deploying, by the plurality of first devices, the target networks based on the indication message.

2. The method according to claim 1, wherein a training process comprises one or more stages; and
the training, based on the first data in the plurality of first devices, the first module, the plurality of second modules, and the early exit modules connected to the respective second modules comprises:
in an i^{th} stage, processing, by the device A, the first data of the i^{th} stage via the first module in the i^{th} stage, to obtain a first feature tensor of the i^{th} stage, wherein i is a positive integer;
sending, by the device A, the first feature tensor of the i^{th} stage to the second device;
training, by the second device, the plurality of second modules in the i^{th} stage and the early exit modules in the i^{th} stage based on the received first feature tensor of the i^{th} stage, to obtain the plurality of trained second modules in the i^{th} stage and the trained early exit modules in the i^{th} stage;
processing, by the second device, the first feature tensor of the i^{th} stage via the plurality of trained second modules in the i^{th} stage, to obtain a first probability distribution of the i^{th} stage;
sending, by the second device, the first probability distribution of the i^{th} stage to the device A; and
performing, by the device A, a plurality of times of iterative training on the first module in the i^{th} stage based on the first data of the i^{th} stage and the received first probability distribution of the i^{th} stage, to obtain a trained first module in the i^{th} stage.

3. The method according to claim 2, wherein the performing, by the device A, the plurality of times of iterative training on the first module in the i^{th} stage based on the first data of the i^{th} stage and the received first probability distribution of the i^{th} stage, to obtain the trained first module in the i^{th} stage comprises:
performing, by the device A, knowledge distillation on the first module in the i^{th} stage based on the first probability distribution of the i^{th} stage and the first data of the i^{th} stage, to obtain the trained first module in the i^{th} stage, wherein
the knowledge distillation is implemented according to a loss function, and the loss function comprises a first loss term, the first loss term is used to evaluate a similarity between a second probability distribution obtained by the first module during the knowledge distillation based on the first data of the i^{th} stage and the first probability distribution of the i^{th} stage.

4. The method according to any one of claims 1 to 3, wherein the method further comprises:
obtaining, by the second device, device performance information of the device A and/or performance information of communication between the device A and the second device; and
determining, by the second device, a target network in the device A based on the device performance information of the device A and/or the performance information of the communication between the device A and the second device.

5. The method according to any one of claims 1 to 4, wherein after deploying, by the device A, the target networks based on the indication message, the method further comprises:
fixing, by the device A, a parameter of the second module in the target network, and training the early exit module in the target network based on first data in the device A, to update the target network.

6. The method according to any one of claims 1 to 5, wherein the method further comprises:
obtaining, by the device A, to-be-processed data;
obtaining, by the device A, a first prediction result that is from at least one early exit module in the target network and that is about the to-be-processed data; and
obtaining, by the device A, a target prediction result of the to-be-processed data based on an early exit condition and the first prediction result, wherein the early exit condition comprises a confidence threshold; and
the confidence threshold is determined based on one or more of the following information:
prediction accuracy of at least one early exit module in the device A, time consumed for prediction of the at least one early exit module in the device A, and performance of the communication between the device A and the second device.

7. The method according to claim 6, wherein the obtaining, by the device A, the target prediction result of the to-be-processed data based on the early exit condition and the first prediction result comprises:
if any first prediction result meets the early exit condition, using, by the device A, the first prediction result that meets the early exit condition as the target prediction result.

8. The method according to claim 6, wherein the obtaining, by the device A, the target prediction result of the to-be-processed data based on the early exit condition and the first prediction result comprises:
if no first prediction result meets the early exit condition, sending, by the device A, a second feature tensor to the second device, wherein the second feature tensor is a feature tensor output by a target module in the device A based on the to-be-processed data, the target module is a trained first module in the device A or a trained second module in the device A, and the target module is determined based on one or more of the following information: a dimension of output data of the trained first module in the device A, a dimension of output data of the trained second module in the device A, and performance of the communication between the device A and the second device;
obtaining, by the second device, the target prediction result based on the received second feature tensor via a second module that is in the plurality of trained second modules and that is after the target module;
sending, by the second device, the target prediction result to the device A; and
receiving, by the device A, the target prediction result from the second device.

9. A neural network training method, applied to a second device, wherein a plurality of second modules in a federated neural network and early exit modules connected to the respective second modules are deployed in the second device, a first module in the federated neural network is deployed in each of a plurality of first devices, and the method comprises:
receiving, by the second device, respective first feature tensors from the plurality of first devices;
training, by the second device based on the first feature tensors, the plurality of second modules and the early exit modules connected to the respective second modules, to obtain a plurality of trained second modules and trained early exit modules, wherein the plurality of trained second modules comprise a module A and a module B, and the trained early exit modules comprise a trained early exit module connected to the module A and a trained early exit module connected to the module B; and
sending, by the second device, indication information to the plurality of first devices, wherein the indication information indicates the plurality of first devices to deploy respective target networks, the target network deployed by a device A in the plurality of first devices comprises a module A in the plurality of trained second modules and the trained early exit module connected to the module A, and the target network deployed by a device B in the plurality of first devices comprises a module B in the plurality of trained second modules and the trained early exit module connected to the module B.

10. The method according to claim 9, wherein the training, by the second device based on the first feature tensors, the plurality of second modules and the early exit modules connected to the respective second modules comprises:
in an i^{th} stage, receiving, by the second device, a first feature tensor of the i^{th} stage from the device A, wherein i is a positive integer;
training, by the second device, the plurality of second modules in the i^{th} stage and the early exit modules in the i^{th} stage based on the received first feature tensor of the i^{th} stage, to obtain the plurality of trained second modules in the i^{th} stage and the trained early exit modules in the i^{th} stage;
processing, by the second device, the first feature tensor of the i^{th} stage via the plurality of trained second modules in the i^{th} stage, to obtain a first probability distribution of the i^{th} stage; and
sending, by the second device, the first probability distribution of the i^{th} stage to the device A.

11. The method according to claim 10, wherein the i^{th} stage comprises one or more iteration processes; and
in a j^{th} iteration process of the i^{th} stage, the training, by the second device, the plurality of second modules in the i^{th} stage and the early exit module in the i^{th} stage based on the received first feature tensor of the i^{th} stage comprises:
obtaining, by the second device, an output probability distribution of each early exit module in the j^{th} iteration process based on a first feature tensor of the j^{th} iteration process, wherein j is a positive integer; and
updating, by the second device, the second module in the j^{th} iteration process and the early exit module in the j^{th} iteration process based on each output probability distribution, a weight corresponding to each output probability distribution, and a label corresponding to the first feature tensor of the j^{th} iteration process, to obtain the trained second module in the j^{th} iteration process and the trained early exit module in the j^{th} iteration process.

12. The method according to any one of claims 9 to 11, wherein the method further comprises:
obtaining, by the second device, device performance information of the device A and/or performance information of communication between the device A and the second device; and
determining, by the second device, a target network in the device A based on the device performance information of the device A and/or the performance information of the communication between the device A and the second device.

13. The method according to any one of claims 9 to 12, wherein the method further comprises:
receiving, by the second device, a second feature tensor from the device A, wherein the second feature tensor is a feature tensor output by a target module in the device A based on to-be-processed data, and the target module is a trained first module in the device A or a trained second module in the device A;
obtaining, by the second device, the target prediction result based on the received second feature tensor via a second module that is in the plurality of trained second modules and that is after the target module; and
sending, by the second device, the target prediction result to the device A.

14. A neural network training system, wherein the neural network training system comprises a plurality of first devices and a second device, a first module in a federated neural network is deployed in each of the plurality of first devices, the first module comprises a feature extraction module, a plurality of second modules in the federated neural network and early exit modules connected to the respective second modules are deployed in the second device, the plurality of first devices comprise a first processing module and a first interface module, and the second device comprises a second processing module and a second interface module;
the plurality of first devices and the second device are configured to train, based on first data in the plurality of first devices, the first module, the plurality of second modules, and the early exit modules connected to the respective second modules, to obtain a trained first module, a plurality of trained second modules, and trained early exit modules;
the first interface module is configured to receive indication information from the second device, wherein the indication information indicates the plurality of first devices to deploy respective target networks, the target network deployed by a device A in the plurality of first devices comprises a module A in the plurality of trained second modules and the trained early exit module connected to the module A, and the target network deployed by a device B in the plurality of first devices comprises a module B in the plurality of trained second modules and the trained early exit module connected to the module B; and
the first processing module is configured to deploy the target networks based on the indication message.

15. The system according to claim 14, wherein
the second interface module is configured to obtain device performance information of the device A and/or performance information of communication between the device A and the second device; and
the second processing module is configured to determine a target network in the device A based on the device performance information of the device A and/or the performance information of the communication between the device A and the second device.

16. The system according to claim 14 or 15, wherein
the first interface module is configured to obtain to-be-processed data; and
the first processing module is configured to:
obtain a first prediction result that is from at least one early exit module in the target network and that is about the to-be-processed data; and
obtain a target prediction result of the to-be-processed data based on an early exit condition and the first prediction result, wherein the early exit condition comprises a confidence threshold; and
the confidence threshold is determined based on one or more of the following information:
prediction accuracy of at least one early exit module in the device A, time consumed for prediction of the at least one early exit module in the device A, and performance of the communication between the device A and the second device.

17. The system according to claim 16, wherein
the first interface module is configured to: if no first prediction result meets the early exit condition, send a second feature tensor to the second device, wherein the second feature tensor is a feature tensor output by a target module in the device A based on the to-be-processed data, the target module is a trained first module in the device A or a trained second module in the device A, and the target module is determined based on one or more of the following information: a dimension of output data of the trained first module in the device A, a dimension of output data of the trained second module in the device A, and performance of the communication between the device A and the second device;
the second processing module is configured to obtain the target prediction result based on the received second feature tensor via a second module that is in the plurality of trained second modules and that is after the target module;
the second interface module is configured to send the target prediction result to the device A; and
the first interface module is configured to receive the target prediction result from the second device.

18. A neural network training apparatus, applied to a second device, wherein a plurality of second modules in a federated neural network and early exit modules connected to the respective second modules are deployed in the second device, a first module in the federated neural network is deployed in each of a plurality of first devices, and the apparatus comprises a second processing module and a second interface module;
the second interface module is configured to receive respective first feature tensors from the plurality of first devices;
the second processing module is configured to train, based on the first feature tensors, the plurality of second modules and the early exit modules connected to the respective second modules, to obtain a plurality of trained second modules and trained early exit modules, wherein the plurality of trained second modules comprise a module A and a module B, and the trained early exit modules comprise a trained early exit module connected to the module A and a trained early exit module connected to the module B; and
the second interface module is configured to send indication information to the plurality of first devices, wherein the indication information indicates the plurality of first devices to deploy respective target networks, the target network deployed by a device A in the plurality of first devices comprises a module A in the plurality of trained second modules and the trained early exit module connected to the module A, and the target network deployed by a device B in the plurality of first devices comprises a module B in the plurality of trained second modules and the trained early exit module connected to the module B.

19. The apparatus according to claim 18, wherein
the second interface module is configured to obtain device performance information of the device A and/or performance information of communication between the device A and the second device; and
the second processing module is configured to determine a target network in the device A based on the device performance information of the device A and/or the performance information of the communication between the device A and the second device.

20. The apparatus according to claim 18 or 19, wherein
the second interface module is configured to receive a second feature tensor from the device A, wherein the second feature tensor is a feature tensor output by a target module in the device A based on to-be-processed data, and the target module is a trained first module in the device A or a trained second module in the device A;
the second processing module is configured to obtain the target prediction result based on the received second feature tensor via a second module that is in the plurality of trained second modules and that is after the target module; and
the second interface module is configured to send the target prediction result to the device A.

21. A neural network training system, wherein the neural network training system comprises a plurality of first devices and a second device, both the plurality of first devices and the second device comprise a processor, a storage, and instructions that are stored in the storage and that are executable by the processor, and the processor executes the instructions to implement steps in the method according to any one of claims 1 to 8.

22. A second device, wherein the second device comprises a processor, a storage, and instructions that are stored in the storage and that are executable by the processor, and the processor executes the instructions to implement steps in the method according to any one of claims 9 to 13.

23. A computer-readable storage medium, wherein the computer-readable storage medium stores a computer program, and when the computer program is executed by a processor, the method according to any one of claims 1 to 13 is implemented.

24. A computer program product comprising instructions, wherein when the instructions are executed by a processor, the method according to any one of claims 1 to 13 is implemented.
